(19) Europäisches Patentamt / European Patent Office / Office européen des brevets

(11) **EP 4 231 573 B1**

(12) **EUROPEAN PATENT SPECIFICATION**

(45) Date of publication and mention
of the grant of the patent:
**03.12.2025 Bulletin 2025/49**

(21) Application number: **21880588.5**

(22) Date of filing: **15.10.2021**

(51) International Patent Classification (IPC):
*H04L 1/00* (2006.01)    *H04L 1/08* (2006.01)
*H04L 1/1829* (2023.01)    *H04L 1/1867* (2023.01)
*H04L 5/00* (2006.01)    *H04L 27/26* (2006.01)
*H04W 72/04* (2023.01)    *H04W 72/0446* (2023.01)
*H04W 72/12* (2023.01)

(52) Cooperative Patent Classification (CPC):
**H04L 5/0053; H04L 1/08; H04L 1/1858;
H04L 1/1861; H04L 1/1896; H04L 5/0094;
H04L 27/2602;** H04W 72/0446; H04W 72/21

(86) International application number:
**PCT/KR2021/014347**

(87) International publication number:
**WO 2022/080941 (21.04.2022 Gazette 2022/16)**

(54) **PUCCH TRANSMISSION FOR COVERAGE IMPROVEMENT**

PUCCH-ÜBERTRAGUNG ZUR ABDECKUNGSVERBESSERUNG

TRANSMISSION PUCCH POUR L'AMÉLIORATION D'UNE COUVERTURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.10.2020  KR 20200133273**

(43) Date of publication of application:
**23.08.2023  Bulletin 2023/34**

(73) Proprietor: LG Electronics Inc.
**Yeongdeungpo-gu
Seoul 07336 (KR)**

(72) Inventors:
• **SHIM, Jaenam
Seoul 06772 (KR)**
• **HWANG, Seunggye
Seoul 06772 (KR)**

(74) Representative: **Frenkel, Matthias Alexander
Wuesthoff & Wuesthoff
Patentanwälte und Rechtsanwalt PartG mbB
Schweigerstraße 2
81541 München (DE)**

(56) References cited:
**EP-A1- 4 191 925      WO-A1-2018/204513
WO-A1-2019/194655      WO-A1-2019/207488
KR-A- 20170 078 591      KR-A- 20180 122 818
US-A1- 2020 205 150      US-A1- 2020 275 436**

Description

## TECHNICAL FIELD

The present disclosure relates to wireless communication.

## BACKGROUND ART

As more and more communication devices require more communication capacity, there is a need for improved mobile broadband communication compared to the existing radio access technology (RAT). Further, massive machine type communications (MTC) providing various services anytime anywhere by connecting many devices and objects is one of major issues to be considered in next-generation communication. In addition, there is ongoing discussion on communication system design considering a service/terminal sensitive to reliability and latency. The introduction of next-generation radio access technology considering enhanced mobile broadband communication (eMBB), massive MTC, ultra-reliable and low latency communication (URLLC), or the like is discussed. This technology is called new RAT or NR in the present disclosure for convenience.

A method of performing a physical uplink control channel (PUCCH) repetition has been considered for coverage enhancement of a PUCCH in the existing NR. However, PUCCH repetition transmission is performed only when a starting symbol and length in a slot for PUCCH transmission are configured and all time resources configured in the slot are available for the PUCCH. Herein, when some time resources among the time resources configured to the PUCCH repetition transmission are not available for the PUCCH, a terminal does not perform PUCCH transmission in the slot. Therefore, there may be a problem in PUCCH coverage enhancement.

US 2020/275436 A1 is directed to a resource determining method in a communication system. A terminal receives first and second configuration information sent by an access network device. The first configuration information is used for indicating a second time domain resource configured by the access network device for a repetition PUCCH. In a specific mode, a quantity of time slots and a starting time point and a quantity of symbols of the repetition PUCCH in each time slot are indicated. The terminal determines, according to the first and second configuration information, a first time domain resource of the repetition PUCCH for sending uplink control information, and sends uplink control information to the access network device through the first time domain resource in n time slots. Optionally, the first time domain resource is an intersection of the second time domain resource and an available time domain resource determined utilizing the second configuration information. According to an example, the second time domain resource is located in the i-th time slot to the i+3th time slot, and is located in the 4th symbol to the 14th symbol in each time slot, and it may be determined that the first time domain resource in the i-th time slot is the 8th symbol to the 14th symbol. EP 4 191 925 A1 falls under Art. 54(3) EPC and is directed to a repeated PUCCH transmission method in a wireless communication system. A base station may configure, for a terminal, a starting symbol of 4 and a length of 10, and may configure the terminal to repeatedly transmit a PUCCH during two slots. In a case in which a PUCCH cannot be transmitted during a symbol period based on the starting symbol and length in the slot, where symbol 0 to symbol 9 of the first slot are unavailable for PUCCH transmission, a first repetition PUCCH may be transmitted on symbols 10 to 13.

WO 2019/207488 A1 discloses systems, methods, and apparatus for communicating transport block repetitions. An example method performed by a wireless device includes receiving an assignment of radio resources corresponding to two or more transmissions with first start and length pairs, each transmission comprising a transport block repetition, where at least one of the first start and length pairs violates a time-domain allocation restriction. The wireless device determines second start and length pairs for the two or more transmissions such that the time-domain allocation restriction is not violated. The wireless device transmits the two or more transmissions according to the determined second start and length pairs.

## DISCLOSURE

## TECHNICAL SOLUTION

The present invention is defined by the appended independent claims. Specific embodiments are defined by the dependent claims. The present specification proposes methods for more effectively using an uplink resource when a terminal performs physical uplink control channel (PUCCH) repetition transmission, and communication devices using the methods. In case of the existing PUCCH repetition, when some symbols among consecutive symbols for PUCCH transmission, included in a specific slot, are not available for PUCCH transmission, PUCCH transmission is not performed for all consecutive symbols for PUCCH transmission in the slot. On the other hand, a terminal transmits a partial PUCCH by using remaining symbols other than some of the symbols.

## ADVANTAGEOUS EFFECTS

According to the present specification, more resource-efficient PUCCH transmission is possible, and PUCCH coverage enhancement may be more improved than the conventional case.

Effects that can be obtained through a specific example of the present specification are not limited to the aforementioned effects. For example, there may be various technical effects that can be understood or derived by a person having ordinary skill in the related art from the present specification. Accordingly, specific effects of the present specification are not limited to those explicitly described in the present specification, and may include various effects that can be understood or derived from technical features of the present specification.

## BRIEF DESCRIPTION OF THE DRAWINGS

The following drawings were created to explain a specific example of the present specification. Since the names of specific devices described in the drawings or the names of specific signals/messages/fields are presented by way of example, the technical features of the present specification are not limited to the specific names used in the following drawings.

FIG. 1 shows a wireless communication system to which the present disclosure can be applied.

FIG. 2 is a diagram showing a wireless protocol architecture for a user plane.

FIG. 3 is a diagram showing a wireless protocol architecture for a control plane.

FIG. 4 shows another example of a wireless communication system to which the technical features of the present disclosure can be applied.

FIG. 5 illustrates a functional division between an NG-RAN and a 5GC.

FIG. 6 illustrates an example of a frame structure that may be applied in NR.

FIG. 7 illustrates a slot structure.

FIG. 8 is a flowchart for an example of a PUCCH transmission method of a UE according to some implementations of the present specification.

FIG. 9 is a flowchart for another example of a PUCCH transmission method of a UE according to some implementations of the present specification.

FIG. 10 is a flowchart for another example of a PUCCH transmission method of a UE according to some implementations of the present specification.

FIG. 11 is a flowchart for another example of a PUCCH transmission method of a UE according to some implementations of the present specification.

FIG. 12 is a flowchart for another example of a PUCCH transmission method of a UE according to some implementations of the present specification.

FIG. 13 is a flowchart for an example of a PUCCH transmission method of a UE according to some implementations of the present specification.

FIG. 14 is a flowchart for an example of a receiving method for a PUCCH repetition of a BS according to some implementations of the present specification.

FIG. 15 shows a communication system (1), in accordance with an embodiment of the present disclosure.

FIG. 16 shows wireless devices, in accordance with an embodiment of the present disclosure.

FIG. 17 shows a signal process circuit for a transmission signal, in accordance with an embodiment of the present disclosure.

FIG. 18 shows another example of a wireless device, in accordance with an embodiment of the present disclosure.

FIG. 19 shows a hand-held device, in accordance with an embodiment of the present disclosure.

FIG. 20 shows a vehicle or an autonomous vehicle, in accordance with an embodiment of the present disclosure.

FIG. 21 shows a vehicle, in accordance with an embodiment of the present disclosure.

FIG. 22 shows an XR device, in accordance with an embodiment of the present disclosure.

FIG. 23 shows a robot, in accordance with an embodiment of the present disclosure.

FIG. 24 shows an AI device, in accordance with an embodiment of the present disclosure.

## DETAILED DESCRIPTION

As used herein, "A or B" may mean "only A", "only B", or "both A and B". That is, "A or B" may be interpreted as "A and/or B" herein. For example, "A, B or C" may mean "only A", "only B", "only C", or "any combination of A, B, and C".

As used herein, a slash (/) or a comma (,) may mean "and/or". For example, "A/B" may mean "A and/or B". Therefore, "A/B" may include "only A", "only B", or "both A and B". For example, "A, B, C" may mean "A, B, or C".

As used herein, "at least one of A and B" may mean "only A", "only B", or "both A and B". Further, as used herein, "at least one of A or B" or "at least one of A and/or B" may be interpreted equally as "at least one of A and B".

As used herein, "at least one of A, B, and C" may mean "only A", "only B", "only C", or "any combination of A, B, and C". Further, "at least one of A, B, or C" or "at least one of A, B, and/or C" may mean "at least one of A, B, and C".

As used herein, parentheses may mean "for example". For instance, the expression "control information (PDCCH)" may mean that a PDCCH is proposed as an example of control information. That is, control information is not limited to a PDCCH, but a PDCCH is proposed as an example of control information. Further, the expression "control information (i.e., a PDCCH)" may also mean that a PDCCH is proposed as an example of control information.

Technical features individually described within a drawing in the present disclosure may be implemented individually or may be implemented simultaneously.

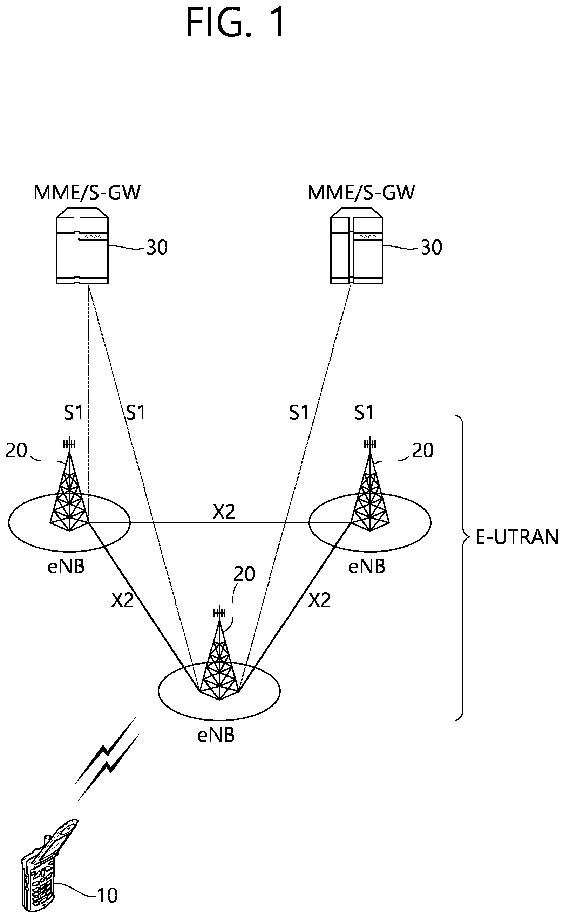

FIG. 1 shows a wireless communication system to which the present disclosure may be applied. The wireless communication system may be referred to as an Evolved-UMTS Terrestrial Radio Access Network (E-UTRAN) or a Long Term Evolution (LTE)/LTE-A system.

The E-UTRAN includes at least one base station (BS) 20 which provides a control plane and a user plane to a user equipment (UE) 10. The UE 10 may be fixed or mobile, and may be referred to as another terminology, such as a mobile station (MS), a user terminal (UT), a subscriber station (SS), a mobile terminal (MT), a wireless device, etc. The BS 20 is generally a fixed station that communicates with the UE 10 and may be referred to as another terminology, such as an evolved node-B (eNB), a base transceiver system (BTS), an access point, etc.

The BSs 20 are interconnected by means of an X2 interface. The BSs 20 are also connected by means of an S1 interface to an evolved packet core (EPC) 30, more specifically, to a mobility management entity (MME) through S1-MME and to a serving gateway (S-GW) through S1-U.

The EPC 30 includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

Layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

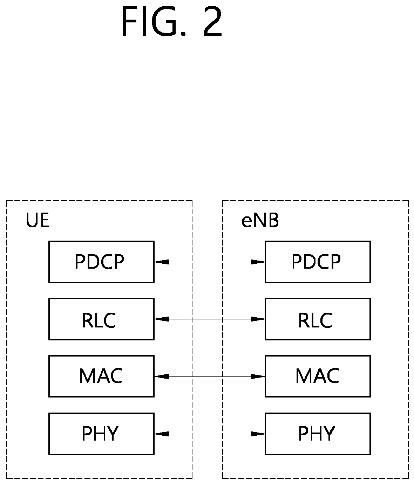

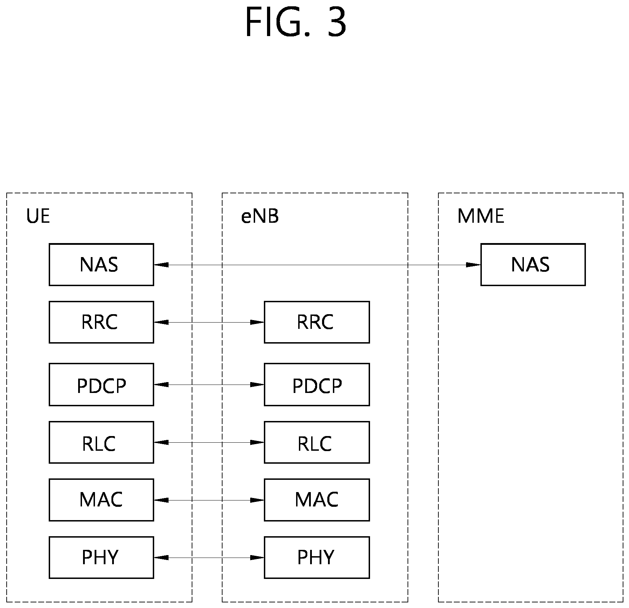

FIG. 2 is a diagram showing a wireless protocol architecture for a user plane. FIG. 3 is a diagram showing a wireless protocol architecture for a control plane. The user plane is a protocol stack for user data transmission. The control plane is a protocol stack for control signal transmission.

Referring to FIGs. 2 and 3, a PHY layer provides an upper layer with an information transfer service through a physical channel. The PHY layer is connected to a medium access control (MAC) layer which is an upper layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels. An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity protection of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to UE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. A Transmission Time Interval (TTI) is a unit time for transmission, e.g., a subframe or a slot.

Hereinafter, a new radio access technology (new RAT, NR) will be described.

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultrareliable and low latency communication (URLLC) is discussed. This new technology may be called new radio access technology (new RAT or NR) in the present disclosure for convenience.

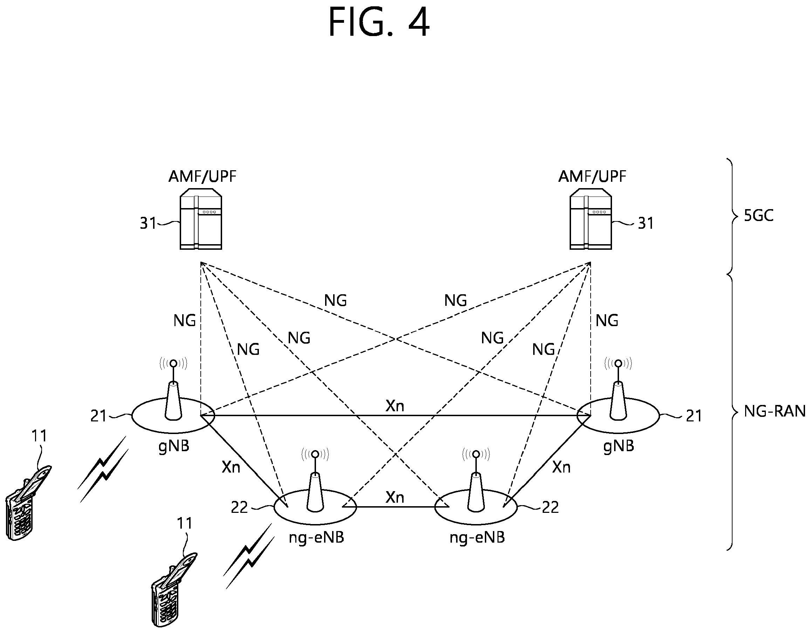

FIG. 4 shows another wireless communication system to which the present disclosure may be applied.

Specifically, FIG. 4 shows a system architecture based on a 5G new radio access technology (NR) system. An entity used in the 5G NR system (hereinafter, simply referred to as "NR") may absorb some or all functions of the entity (e.g., eNB, MME, S-GW) introduced in FIG. 1 (e.g., eNB, MME, S-GW). The entity used in the NR system may be identified in the name of "NG" to distinguish it from LTE.

Referring to FIG. 4, a wireless communication system includes one or more UEs 11, a next-generation RAN (NG-RAN), and a 5th generation core network (5GC). The NG-RAN consists of at least one NG-RAN node. The NG-RAN node is an entity corresponding to the BS 20 of FIG. 1. The NG-RAN node consists of at least one gNB 21 and/or at least one ng-eNB 22. The gNB 21 provides NR user plane and control plane protocol terminations towards the UE 11. The Ng-eNB 22 provides an E-UTRA user plane and a control plane protocol termination towards the UE 11.

The 5GC includes an access and mobility management function (AMF), a user plane function (UPF), and a session management function (SMF). The AMF hosts functions, such as non-access stratum (NAS) security, idle state mobility processing, and so on. The AMF is an entity including the conventional MMF function. The UPF hosts functions, such as mobility anchoring, protocol data unit (PDU) processing, and so on. The UPF is an entity including the conventional S-GW function. The SMF hosts functions, such as UE Internet Protocol (IP) address allocation, PDU session control, and so on.

The gNB and the ng-eNB are interconnected through an Xn interface. The gNB and the ng-eNB are also connected to the 5GC through an NG interface. More specifically, the gNB and the ng-eNB are connected to the AMF through an NG-C interface, and are connected to the UPF through an NG-U interface.

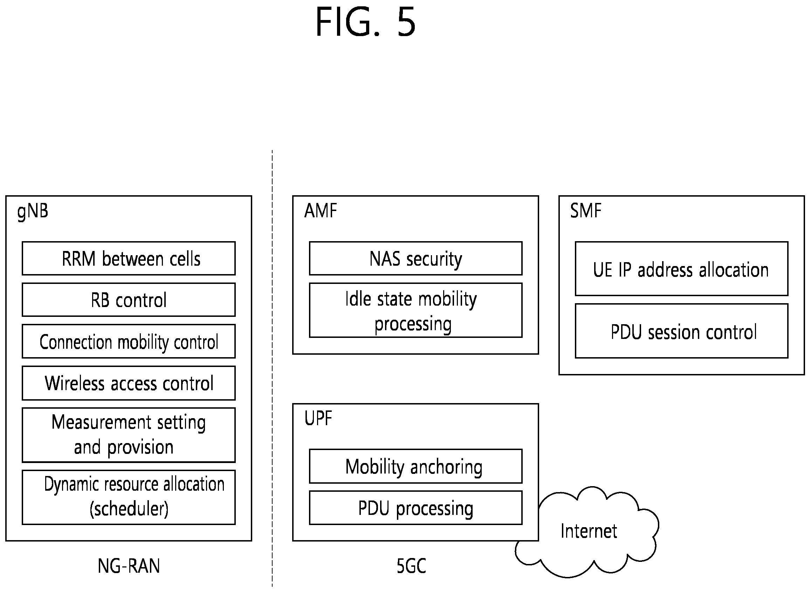

FIG. 5 illustrates a functional division between an NG-RAN and a 5GC.

Referring to FIG. 5, the gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as UE IP address assignment, PDU session control, and so on.

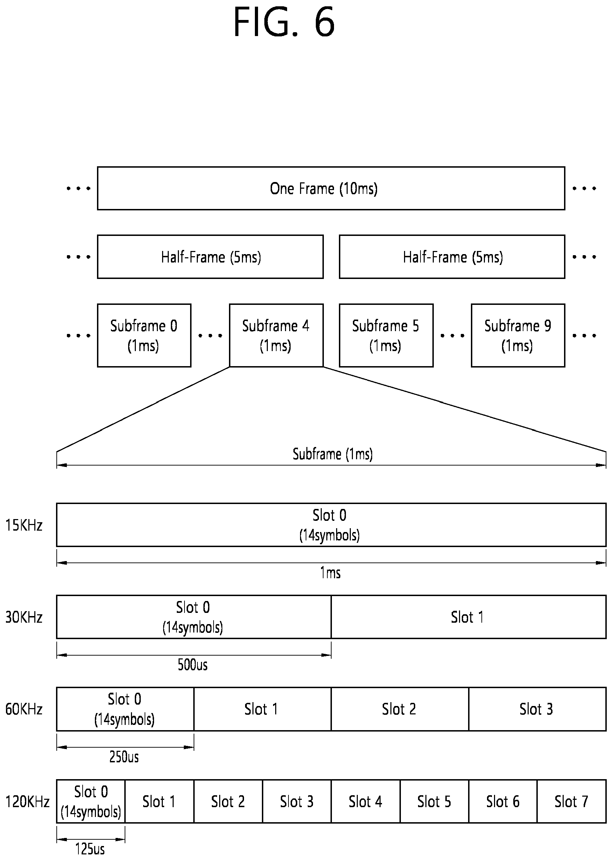

FIG. 6 illustrates an example of a frame structure that may be applied in NR.

Referring to FIG. 6, a frame may be composed of 10 milliseconds (ms) and include 10 subframes each composed of 1 ms.

In the NR, uplink and downlink transmissions may be configured on a frame basis. A radio frame has a length of 10ms, and may be defined as two 5ms half-frames (HFs). The HF may be defined as five 1ms sub-frames (SFs). The SF is divided into one or more slots, and the number of slots in the SF depends on a subcarrier spacing (SCS). Each slot includes 12 or 14 OFDM(A) symbols according to a cyclic prefix (CP). When a normal CP is used, each slot includes 14 symbols. When an extended CP is used, each slot includes 12 symbols. Herein, the symbol may include an OFDM symbol (or CP-OFDM symbol) and an SC-FDMA symbol (or DFT-S-OFDM symbol).

One or a plurality of slots may be included in a subframe according to subcarrier spacings.

The following table 1 illustrates a subcarrier spacing configuration $\mu$.

[Table 1]

| $\mu$ | $\Delta f = 2^{\mu} \cdot 15[kHz]$ | Cyclic prefix |
|---|---|---|
| 0 | 15 | Normal |
| 1 | 30 | Normal |
| 2 | 60 | Normal Extended |
| 3 | 120 | Normal |
| 4 | 240 | Normal |

The following table 2 illustrates the number of slots in a frame ($N^{frame,\mu}_{slot}$), the number of slots in a subframe ($N^{subframe,\mu}_{slot}$), the number of symbols in a slot ($N^{slot}_{symb}$), and the like, according to subcarrier spacing configurations $\mu$.

[Table 2]

| $\mu$ | $N^{slot}_{symb}$ | $N^{frame,\mu}_{slot}$ | $N^{subframe,\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 3 below illustrates that the number of symbols per slot, the number of slots per frame, and the number of slots per subframe vary depending on the SCS, in case of using an extended CP.

[Table 3]

| SCS($15*2^{\mu}$) | $N^{slot}_{symb}$ | $N^{frame,u}_{slot}$ | $N^{subframe,u}_{slot}$ |
|---|---|---|---|
| 60KHz ($\mu$=2) | 12 | 40 | 4 |

NR supports multiple numbers (or subcarrier spacing (SCS)) to support various 5G services. For example, when the SCS is 15kHz, a wide region in the legacy cellular band is supported; and when the SCS is 30kHz/60kHz, dense urban areas, low time delay and wide carrier bandwidth are supported; and when the SCS is 60kHz or more, a bandwidth of more than 24.25GHz is supported in order to overcome phase noise.

The NR frequency band may be defined as two types of frequency ranges (FR1 and FR2). A numerical value of the frequency range may be changed and, for example, the two types of frequency ranges (FR1 and FR2) may be as shown in Table 4 below. For convenience of explanation, among the frequency ranges used in the NR system, FR1 may refer to "sub 6GHz range" and FR2 may refer to "above 6GHz range" and may be called millimeter wave (mmW).

[Table 4]

| Frequency Range designation | Corresponding frequency range | Subcarrier Spacing |
|---|---|---|
| FR1 | 450MHz-6000MHz | 15, 30, 60kHz |
| FR2 | 24250MHz-52600MHz | 60, 120, 240kHz |

As described above, the numerical value of the frequency range of the NR system may be changed. For example, FR1 may include a band of 410 MHz to 7125 MHz as shown in Table 5 below. That is, FR1 may include a frequency band of 6 GHz (or 5850, 5900, 5925 MHz, etc.) or higher. For example, the frequency band of 6 GHz (or 5850, 5900, 5925 MHz, etc.) or higher included in FR1 may include an unlicensed band. The unlicensed band may be used for various purposes, for example, for communication for a vehicle (e.g., autonomous driving).

[Table 5]

| Frequency Range designation | Corresponding frequency range | Subcarrier Spacing |
|---|---|---|
| FR1 | 410MHz-7125MHz | 15, 30, 60kHz |
| FR2 | 24250MHz-52600MHz | 60, 120, 240kHz |

In an NR system, OFDM(A) numerologies (e.g., SCS, CP length, and so on) may be differently configured between a plurality of cells integrated to one UE. Accordingly, an (absolute time) duration of a time resource (e.g., SF, slot or TTI) (for convenience, collectively referred to as a time unit (TU)) configured of the same number of symbols may be differently configured between the integrated cells.

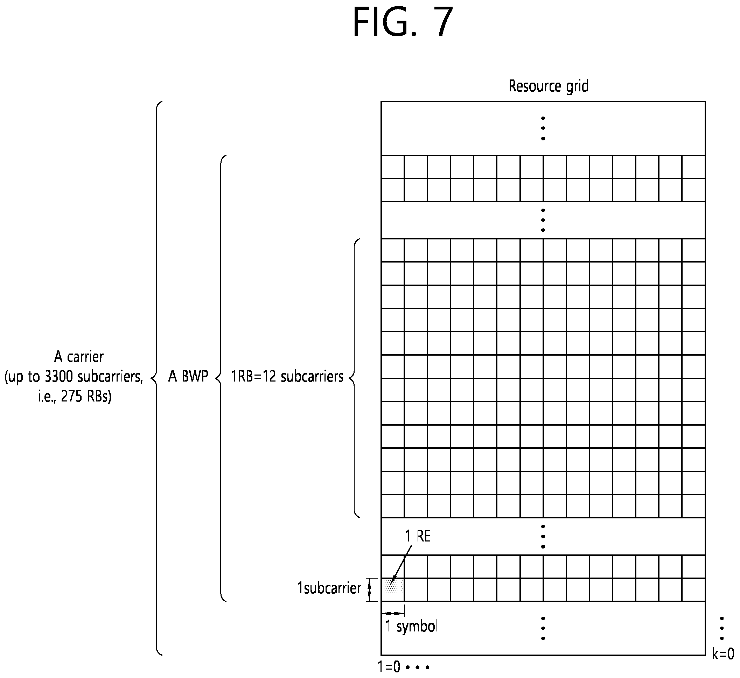

FIG. 7 illustrates a slot structure.

Referring to FIG. 7, a slot includes a plurality of symbols in a time domain. For example, in case of a normal CP, one slot may include 14 symbols. However, in case of an extended CP, one slot may include 12 symbols. Alternatively, in case of the normal CP, one slot may include 7 symbols. However, in case of the extended CP, one slot may include 6 symbols.

A carrier includes a plurality of subcarriers in a frequency domain. A resource block (RB) may be defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, and so on). The carrier may include up to N (e.g., 5) BWPs. Data communication may be performed through an activated BWP. Each element may be referred to as a resource element (RE) within a resource grid, and one complex symbol may be mapped thereto.

A physical downlink control channel (PDCCH) may include one or more control channel elements (CCEs) as illustrated in the following table 6.

[Table 6]

| Aggregation level | Number of CCEs |
|---|---|
| 1 | 1 |
| 2 | 2 |
| 4 | 4 |
| 8 | 8 |
| 16 | 16 |

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain.

A new unit called a control resource set (CORESET) may be introduced in the NR. The UE may receive a PDCCH in the CORESET.

Meanwhile, a physical uplink shared channel (PUSCH), a physical uplink control channel (PUCCH), and other signals are discussed in coverage enhancement (CE) for an uplink signal. Hereinafter, PUCCH CE will be described.

A method of performing repetition for CE of a PUCCH has been considered in the existing NR. The PUCCH repetition may be applied only to PUCCH formats 1, 3, 4 (long PUCCH). In addition, three cases, i.e., nrofSlots=n2, n4, n8(PUCCH-FormatConfig), may be considered to the number of PUCCH repetitions. In the PUCCH repetition, all repeated PUCCHs may have the same number of consecutive symbols and the same first symbol, and may have the same location in a slot. In addition, when interslotFrequencyHopping is configured, frequency hopping during the PUCCH repetition may be applied to startingPRB for even-numbered slots and secondHopPRB for odd-numbered slots. In addition, a UE does not multiplex different uplink control information (UCI) types of the repeated PUCCHs. Therefore, when different PUCCHs overlap in a duration within a slot, the UE transmits any one PUCCH only and drops the remaining PUCCHs according to a priority rule (e.g., HARQ-ACK > SR > CSI), or transmits an earlier starting PUCCH (with same priority).

The PUCCH is repeated only at the same location in each slot for only a long PUCCH, and thus an actual repetition count may be less than a determined count. In particular, as described above, since a special slot (S slot) includes downlink (D), flexible (F), and uplink (U) symbols, it is difficult to perform the PUCCH repetition. In order to solve this problem, a next-generation PUCCH CE method (e.g., DMRS-less PUCCH, PUCCH repetition such as a PUSCH repetition type B for UCI of at least 11 bits or less, an explicit or implicit dynamic PUCCH repetition factor indication, DMRS bundling cross PUCCH repetitions, etc.) may be considered. PUCCH repetition transmission in the S slot through UCI split may also be considered as one method, but this has a limitation in that a gain in terms of latency reduction is higher than that of CE. As a PUCCH repetition of a new method, a method of performing transmission repeatedly for consecutive symbols may be considered rather than designating and repeating a starting symbol and length in a slot as in the existing PUCCH repetition type B.

As such, as one of the CE methods of the PUCCH, many methods using the S slot when performing a repetition have been proposed. However, since the S slot includes all of D, F, and U symbols, there is a limitation in PUCCH transmission. In the existing PUCCH transmission, if a symbol not capable of performing transmission is included among symbols specified by designing a starting symbol and length in a slot, the UE does not perform PUCCH transmission in the slot. Since a PUCCH transmission count is predetermined, PUCCH transmission is delayed in the aforementioned case, and thus it is difficult to ensure similarity/identity of a channel (e.g., channel estimation/status) between PUCCH transmissions in which a repetition is configured, which may result in a great bottleneck when performing repetition aiming at CE. In addition, since independent channel estimation is required in each PUCCH transmission, the aforementioned case does not meet an original purpose of PUCCH repetition/CE, and is not able to reduce overhead, which may result in waste of uplink resources.

Hereinafter, the proposal of the present disclosure will be described in greater detail. Specifically, a time-domain resource for the existing PCCCH repetition is determined based on the number of slots for the PUCCH repetition, a starting symbol (or a first symbol) in a slot for the PUCCH repetition, and the number of consecutive symbols for the PUCCH repetition. That is, the time-domain resource for the existing PUCCH repetition may be constructed of the same number of consecutive symbols (also referred to as a symbol length or a length) starting at the same location for each of a plurality of slots. However, in case of the existing PUCCH repetition, when some symbols among consecutive symbols for PUCCH transmission included in a specific slot are not available for PUCCH transmission, PUCCH transmission is not performed for all consecutive symbols for PUCCH transmission in the slot. To prevent the inefficient use of resources, the present specification proposes methods described below for an improved PUCCH repetition.

The following drawings are provided to illustrate specific examples of the present specification. A name of a specific device or a name of a specific signal/message/field disclosed in the drawings is proposed for exemplary purposes, and technical features of the present specification are not limited to the specific name used in the following drawings. In addition, methods/configurations proposed in the present specification may be combined in various manners.

First, a PUCCH transmission method for some symbols in a slot in which the PUCCH repetition is configured is proposed.

An embodiment of the present specification proposes a method for more effectively using an uplink resource, when a PUCCH is repeated for CE of the PUCCH. In the present specification, among N consecutive slots in which the PUCCH repetition is configured, a slot not capable of transmitting the PUCCH according to the existing NR method is referred to as an X-slot. For example, among symbols in which PUCCH transmission is configured in a slot, a slot including a symbol not capable of performing PUCCH transmission may be called the X-slot. When the existing NR operation is applied to the X-slot, a UE skips PUCCH transmission in the X-slot. On the other hand, according to the proposed method, the UE/terminal transmits a part of the PUCCH by using only available symbols in the X-slot.

If a PUCCH to be transmitted by the UE is referred to as an original PUCCH, a part of a PUCCH transmitted by using only available symbols in the aforementioned X-slot is referred to as a partial PUCCH. Herein, the partial PUCCH may be a copy of all or a part of a symbol level of the original PUCCH, or a PUCCH generated by copying all or a part of a coded bit of the original PUCCH, or a PUCCH generated by copying a part of an information level, i.e., UCI, of the original PUCCH. Alternatively, the partial PUCCH is a PUCCH excluding a DMRS from the original PUCCH, or a PUCCH punctured and/or rate-matched to the original PUCCH. Alternatively, the partial PUCCH may be a PUCCH independent of the original PUCCH. For example, after splitting the original PUCCH at the UCI, encoded bit or symbol level to create two PUCCHs, a PUCCH with a longer UCI, bit, or symbol length may be referred to as a new original PUCCH, and a PUCCH with a shorter one is referred to as a partial PUCCH.

For a set of consecutive symbols configured for the existing PUCCH repetition, if an unavailable symbol for PUCCH transmission is not included in the set, the set is referred to as an original PUCCH in the present specification. In addition, for the consecutive symbols configured for the existing PUCCH repetition, if the unavailable symbol for the PUCCH transmission is included in the set, the set may be referred to as a partial PUCCH in the present specification.

When there are N X-slots among M slots in which a repetition is configured, the UE may define the number of slots capable of transmitting a partial PUCCH (referred to as Y-slots in the present specification) in practice according to the following condition. A method of determining a slot for transmitting the partial PUCCH may define the same condition for all partial PUCCHs, or may apply a different condition for each slot.

In other words, the Y-slot may mean a slot in which the UE is able to transmit the partial PUCCH among the X-slots. Examples of a method of determining the number of Y-slots are as follows.

(Method 1-1) For example, 1-slot may be defined for each (minimum) number of (consecutive) symbols in which partial PUCCH transmission is allowable. For example, the UE/BS may define the Y-slot by considering only slots in which the number of symbols available for a PUCCH in the X-slot (hereinafter, simply referred to as an available symbol) is greater than or equal to P. For example, the UE/BS may count only the number of available consecutive symbols in a slot, and if this value is greater than or equal to P, may determine/count this as a slot in which a partial PUCCH is transmitted. Alternatively, the UE/BS may count the number of slots in which the number of available symbols is greater than or equal to P irrespective of continuity of available symbols in a slot, and if this value is greater than or equal to P, may determine/count this as a slot in which partial PUCCH transmission is possible. In this case, P may be a value considering a symbol length of a pre-defined/configured partial PUCCH. That is, the symbol length of the partial PUCCH or an integer multiple thereof may be P. For example, P may be defined for each subcarrier spacing (SCS), or P may be defined for each PUCCH format (group).

(Method 1-2) The Y-slot may be defined by using the number P of available symbols of the X-slot against the number R of symbols of the original PUCCH. For example, the UE/BS may determine/count only a slot, in which a P-to-R ratio is greater than or equal to a pre-defined/configured specific ratio or R-P is less than or equal to a specific number, as the Y-slot.

(Method 1-3) The Y-slot may be defined by using the number P of available symbols of the X-slot against the number Q of symbols of the partial PUCCH. The number Q of symbols of the partial PUCCH may be pre-defined for each SCS/PUCCH format or may be signaled based on a higher layer signal. The UE/BS may determine/count the Y-slot by using only a slot, in which a Q-to-M ratio is greater than or equal to a pre-defined or higher layer-signaled specific ratio or Q-P is less than or equal to a specific number. In this case, for example, the partial PUCCH may be generated before considering the Y-slot. For example, the UE may generate the partial PUCCH in advance without considering an available (consecutive) symbol length (count) or the like of the X-slot. Therefore, advantageously, the UE is capable of securing a sufficient processing time to generate the partial PUCCH.

(Method 1-4) Even if the conditions of the methods 1-1 to 1-3 or the like are not satisfied, the number of Y-slots capable of transmitting the partial PUCCH may be fixed/pre-defined/signaled.

By considering the number of Y slots capable of transmitting the partial PUCCH determined using the method above, the UE/BS may define a partial PUCCH transmission count per slot according to a method described below.

First, a method of transmitting a partial PUCCH the same number of times in all Y-slots capable of transmitting the partial PUCCH will be proposed.

The simplest partial PUCCH transmission method is to (repeatedly) transmit a partial PUCCH the same number of times (pre-defined/configured) in each Y-slot in which a UE is able to transmit the partial PUCCH. The UE may determine a partial PUCCH transmission count by considering the number of available symbols capable of transmitting the partial PUCCH in the Y-slot. For example, when M or more consecutive or non-consecutive symbols are available in all slots capable of transmitting the partial PUCCH (e.g., slots satisfying a Y-slot requirement), that is, when at least M consecutive or non-consecutive symbols are capable of transmitting the partial PUCCH in all Y-slots, the UE may consider this to define partial PUCCH transmission count per slot. For example, the UE may consider a length Q of the partial PUCCH (e.g., a symbol count of the partial PUCCH or a payload size of the partial PUCCH) together to define the partial PUCCH transmission count per slot as ceiling(M/Q) or floor(M/Q) or the like. For example, when 5 consecutive symbols are available in all slot(s) capable of transmitting the partial PUCCH and a length of the partial PUCCH is 2, the UE may transmit the partial PUCCH two times (i.e., floor(5/2)=2) in each of all slots. In this case, the UE may arrange the partial PUCCH(s) repeated in a slot consecutively at a symbol index, or transmit them with an interval equal to a symbol length, or arrange the partial PUCCH(s) symmetrically to a specific symbol in the slot. For example, when the number of non-consecutive symbols is used to determine the partial PUCCH transmission count, the partial PUCCH(s) may also be (repeatedly) transmitted in the non-consecutive symbols. For example, the partial PUCCH may be transmitted at symbols indices 2, 3, 5, 6, 7, and 8 in a slot, when a symbol length of the partial PUCCH is 3 and the partial PUCCH is transmitted two times for each slot. In this case, the UE may transmit the partial PUCCH at symbol indices 2, 3, 5 and 6, 7, 8 in the slot (e.g., transmit it two times).

Alternatively, when there are N Y-symbols capable of transmitting the partial PUCCH among M slots in which a repetition is configured, the partial PUCCH transmission count in each Y-slot may be set to 1 time, or may be determined using a function of M and N, a function of M, a function of N, or the like. For example, if there are 3 Y-slots capable of transmitting the partial PUCCH among 9 slots in which the PUCCH repetition is configured, transmission of the partial PUCCH may be performed one time or may be performed 8 times, 3 times, or the like in all Y-slots. All of the partial PUCCHs transmitted by the UE may be identical or not identical.

In addition, the UE may apply a starting symbol and length for transmitting a (partial) PUCCH for all Y-slots in which a repetition is configured, differently for each slot. For example, the UE may determine a mapping symbol and length of the (partial) PUCCH independently for each Y-slot, based on an available (consecutive) symbol count in a corresponding Y-slot and/or locations of corresponding symbols. Further, proposed methods of the present specification are not limited thereto.

Next, a method of transmitting a partial PUCCH the different number of times for each Y-slot capable of transmitting the partial PUCCH will be proposed.

The partial PUCCH may be transmitted the different number of times for each Y-slot. Herein, the following two scenarios may be considered.

(Scenario 1) When a partial PUCCH transmission count is defined/configured

For example, when a symbol length Q of the partial PUCCH is defined/configured, the partial PUCCH may be arranged in an orderly manner based on a symbol index for available symbols in a Y-slot irrespective of a slot index. However, in this case, a UE is not able to arrange one partial PUCCH across several slots. In addition, the UE may not arrange the partial PUCCH even in a Y-slot determined to be capable of transmitting the partial PUCCH. For example, the UE may determine that it is possible to transmit the partial PUCCH in last two slots in which a repetition is configured, when 8 symbols are resources capable of performing transmission in each slot, and a symbol length of the partial PUCCH is 4. In this case, the UE may transmit the partial PUCCH in a first slot out of the two slots and may not arrange/map the partial PUCCH in the last slot. Alternatively, when the partial PUCCH is transmitted at least two times in a slot for transmitting the partial PUCCH, the UE may arrange it symmetrically to a specific symbol index in a slot, or arrange it such that an available symbol interval is spaced apart as far as possible between a plurality of partial PUCCHs, or arrange it with a regular symbol index between the partial PUCCHs in the slot.

Alternatively, if the symbol length Q of the partial PUCCH cannot be defined/configured or is not pre-defined/-configured, the UE may transmit it less than the pre-defined/configured partial PUCCH transmission count due to lack of resources, even if the partial PUCCH is arranged/mapped based on the aforementioned method.

(Scenario 2) When the partial PUCCH transmission count is not determined

The UE may arrange/map the partial PUCCH in an orderly manner based on an index of an available symbol in a Y-slot. In this case, the arrangement method of the aforementioned scenario 1 may be applied, and the UE may additionally consider the following partial PUCCH arrangement/mapping method. For example, the UE may additionally arrange/map the partial PUCCH only when pre-defined z symbols remain after arranging/mapping the partial PUCCH in the available Y-slot.

Hereinafter, a method of counting a PUCCH repetition count, including a partial PUCCH, is proposed.

According to a PUCCH repetition procedure defined in NR, when a PUCCH repetition is configured in a UE, the UE performs the PUCCH repetition the number of times corresponding to nrofSlots. Herein, when an original PUCCH cannot be transmitted in a specific slot, a UE performing the existing procedure does not transmit the PUCCH in the slot and does not subtract this from the count nrofSlots. According to an embodiment of the present specification, in addition to the method of counting an original PUCCH transmission count, when transmitting the partial PUCCH, the UE may count a PUCCH repetition transmission count nrofSlots according to the following options.

(Option 1) Irrespective of whether a partial PUCCH can be transmitted, an absolute X-slot count may be considered as a PUCCH repetition count.

Irrespective of whether a partial PUCCH is transmitted in an actual slot, a UE may count a (partial) PUCCH repetition count, including X-slots not capable of transmitting an original PUCCH. For example, since the UE counts a (partial) PUCCH repetition count irrespective of an actual transmission count of the partial PUCCH, an actual transmission count of the original PUCCH may be less than a repetition count configured for the UE, but a possibility that the partial PUCCH is transmitted may be increased.

(Option 2) The number of Y-slots capable of transmitting the partial PUCCH or the number of slots for transmitting the partial PUCCH may be considered as a (partial) PUCCH repetition count.

Irrespective of an actual transmission count of the partial PUCCH, the number of Y-slots capable of transmitting the partial PUCCH or the number of slots for transmitting the partial PUCCH may be included in the (partial) PUCCH repetition count. In this case, since the UE counts the (partial) PUCCH repetition count irrespective of the actual transmission count of the partial PUCCH, the actual transmission count of the original PUCCH may be less than the (partial) PUCCH repetition count. However, since a slot capable of transmitting the partial PUCCH or for transmitting the partial PUCCH is counted, a sum of the transmission count of the original PUCCH and the transmission count of the partial PUCCH may be higher than the repetition count.

(Option 3) Transmission of each partial PUCCH may be considered as a repetition count.

In this case, the sum of the transmission count of the original PUCCH and the transmission count of the partial PUCCH is equal to the configured repetition count, but there is high possibility that the partial PUCCH has a less amount of information, compared to the original PUCCH. For example, a UE/BS may add the original PUCCH transmission count and the partial PUCCH transmission count (or the number of times of counting that transmission is possible) to determine whether the PUCCH repetition count nrofSlots configured in the UE is satisfied.

(Option 4) The partial PUCCH may not be considered as the PUCCH repetition count.

In this case, the original PUCCH may be repeated by the existing repetition count, and the partial PUCCH may be transmitted additionally in a slot capable of performing transmission among slots in which a repetition is configured. This method may have the least change/impact for the existing procedure while promoting CE.

Hereinafter, frequency hopping of a PUCCH repetition, including a partial PUCCH, will be described.

Intra-slot frequency hopping and inter-slot frequency hopping are not configured at the same time in the existing PUCCH repetition. Therefore, in case of the partial PUCCH, the intra-slot frequency hopping and the inter-slot frequency hopping may not be configured at the same time. In addition, even if the intra-slot frequency hopping is configured for repetition in the partial PUCCH, a UE may not perform intra-slot frequency hopping of the partial PUCCH. Alternatively, if the intra-slot frequency hopping is configured, the UE may arrange/map the partial PUCCH by treating a slot for arranging/mapping the partial PUCCH as a different slot depending on frequency hopping.

The UE may consider the following methods when inter-slot frequency hopping is configured for the partial PUCCH.

First, similarly to the existing operation, the UE may apply startingPRB and secondHopPRB to even-numbered slots and odd-numbered slots. In this case, the even-numbered slot and the odd-numbered slot may be applied separately to the partial PUCCH and the original PUCCH, respectively. For example, when the UE is configured to repeat the PUCCH four times and the partial PUCCH is transmitted in slots 1 and 3, and when the original PUCCH is transmitted in slots 2 and 4, startingPRB may be applied to the slots 1 and 2, and secondHopPRB may be applied to the slots 3 and 4. Alternatively, the even-numbered slot and the odd-numbered slot may be defined by combining the partial PUCCH and the original PUCCH. In the same example, startingPRB may be applied to the slots 1 and 3, and secondHopPRB may be applied to the slots 2 and 4.

Second, when inter-slot frequency hopping is configured for the partial PUCCH, the UE may transmit all partial PUCCHs with the same frequency. That is, startingPRB or secondHopPRB may be applied to all partial PUCCHs.

Alternatively, when one or more of QCL(quasi co-location)(e.g., QCL between corresponding antenna ports is assumed), transmission precoder, and UE transmission beam are applied equally to a PUCCH repetition within a specific time and when the UE transmits a PUCCH (e.g., a PUCCH accompanying DMRS) and a partial PUCCH by using the same frequency resource or the same PRB, the UE may not include the DMRS in partial PUCCH transmission (the DMRS for the partial PUCCH is omitted). A signal including the partial PUCCH may be generated by excluding the DMRS ever since a process in which the UE generates the signal, or may be transmitted by the UE by excluding the DMRS from a signal including the partial PUCCH.

Hereinafter, an intra-slot arrangement method of a partial PUCCH will be described.

A UE may arrange/map the partial PUCCHs in order (e.g., ascending order of symbol index) or in reverse order (e.g., descending order of symbol index) according to an index of an available symbol in a corresponding slot. When a plurality of partial PUCCHs are transmitted in one slot, the UE transmits one partial PUCCH through consecutive symbols. A distance in units of symbols between the partial PUCCHs may be arranged as far as possible (within an available slot), or the partial PUCCHs may be consecutively arranged/mapped.

When a PUCCH repetition is configured in the UE, the UE may apply a different starting symbol and length for each of slots for transmitting the original PUCCH or the partial PUCCH. Alternatively, the UE may apply the same starting symbol and length to the slots for transmitting the original PUCCH, and apply the same starting symbol and length to all slots for transmitting the partial PUCCH. The starting symbol and length of the original PUCCH may be configured differently from the starting symbol and length of the partial PUCCH.

Meanwhile, the partial PUCCH repetition operation proposed in the present specification may be configured to the UE, based on various methods. For example, upon receiving a configuration for coverage enhancement, the UE may perform the partial PUCCH repetition operation, based on the configuration. Herein, the configuration may be transmitted to the UE through various signals/methods such as RRC signaling, MAC-CE signaling, DCI, or the like.

Examples of a flowchart of a PUCCH transmission/reception method will be illustrated hereinafter, based on the proposed methods/embodiments described above. The flowchart below is only a simple example, and the proposed methods of the present specification are not limited to the flowchart below.

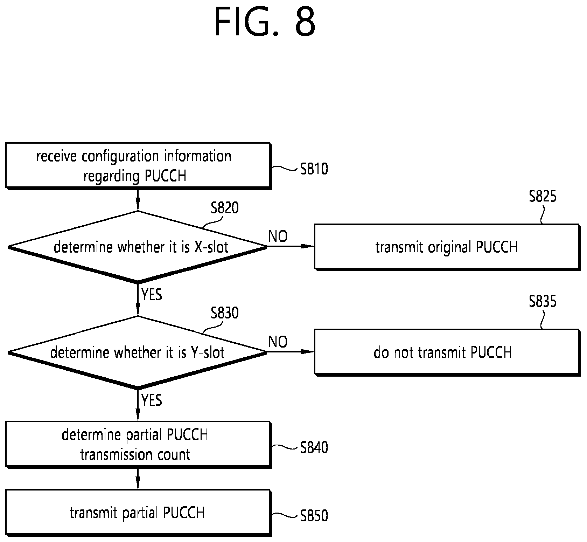

FIG. 8 is a flowchart for an example of a PUCCH transmission method of a UE according to some implementations of the present specification.

Referring to FIG. 8, the UE receives configuration information regarding a PUCCH (S810). For example, the UE may receive the configuration information regarding the PUCCH from a network (e.g., at last one BS) through higher layer signaling. The configuration information regarding the PUCCH may include, for example, at least one of information regarding a PUCCH time resource (e.g., a starting symbol, the number of symbols, etc.), information regarding a PUCCH frequency resource (e.g., a starting PRB), information regarding whether PUCCH group hopping is achieved, information regarding PUCCH power, CS-related information, orthogonal code-related information, PUCCH format-related information, information regarding PUCCH repetition (e.g., the number of repetition slots, whether frequency hopping is achieved in repetition, etc.), and PUCCH DMRS-related information. However, the configuration information regarding the PUCCH is not limited thereto. In addition, the configuration information regarding the PUCCH may further include additional configuration information for partial PUCCH transmission. Based on configuration information regarding the PUCCH, the UE may generate a PUCCH for carrying UCI. The UCI may include at least one of an HARQ-ACK, a CSI part I, a CSI part II, and an SR.

The UE determines whether a slot in which PUCCH transmission is configured is an X-slot (S820). In other words, the UE determines whether the slot in which PUCCH transmission is configured is a slot not capable of transmitting the PUCCH according to a method of the legacy NR among N consecutive slots in the which PUCCH repetition is configured. For example, among symbols in which PUCCH transmission is configured in a slot, a slot including the symbol not capable of performing PUCCH transmission may be called the X-slot.

When a corresponding slot is not the X-slot, the UE transmits an original PUCCH (S825). Alternatively, when the corresponding slot is the X-slot, the UE determines whether the corresponding slot is a Y-slot (S830). Herein, as described above, the Y-slot may mean a slot in which the UE is able to transmit a partial PUCCH among the X-slots.

When the corresponding slot is not the Y-slot, the UE does not transmit the PUCCH (S835). Alternatively, when the corresponding slot is the Y-slot, the UE may transmit the partial PUCCH at the corresponding slot. In this case, the UE determines a partial PUCCH transmission count for transmission per one slot (S840). Herein, the aforementioned methods/examples may be used to determine the partial PUCCH transmission count. The UE transmits the partial PUCCH, based on the determined the partial PUCCH transmission count (S850).

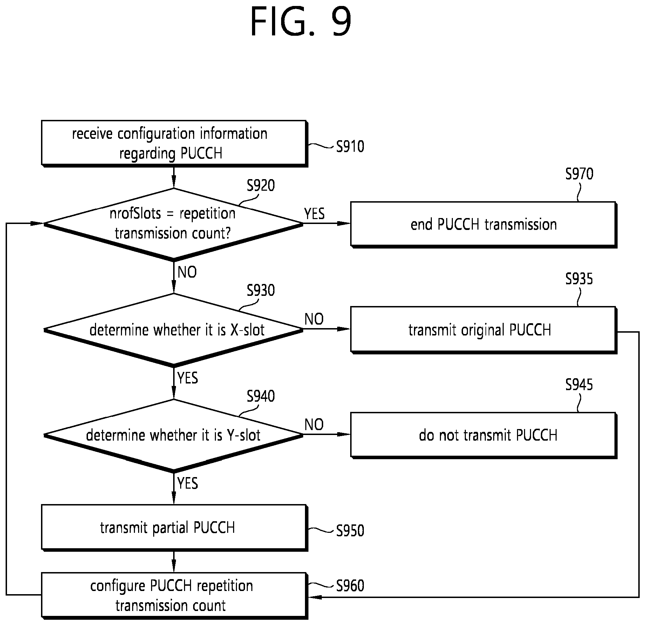

FIG. 9 is a flowchart for another example of a PUCCH transmission method of a UE according to some implementations of the present specification.

Referring to FIG. 9, the UE receives configuration information regarding a PUCCH (S910). The step above may be the same as the step S810 of FIG. 8. In addition, the configuration information regarding the PUCCH may indicate a parameter nrofSlots. The parameter may be a parameter for the PUCCH repetition count.

The parameter nrofSlots may be configured individually for each of original PUCCH transmission and partial PUCCH transmission, or may be configured equally. The UE may: (i) count a PUCCH transmission count individually for each original PUCCH transmission and partial PUCCH transmission, and subtract the parameter nrofSlots for each transmission; (ii) subtract one parameter nrofSlots by adding the original PUCCH transmission count and the partial PUCCH transmission count; or (iii) substrate a value of the parameter nrofSlots by counting only the original PUCCH transmission count.

Thereafter, the UE determines whether a value of the parameter nrofSlots is equal to a repetition transmission count (S920). Herein, the step above may be omitted before PUCCH transmission after receiving the configuration information regarding the PUCCH. That is, the step above may be performed after initial PUCCH transmission.

When it is before PUCCH transmission after receiving the configuration information regarding the PUCCH or when the value of nrofSlots is not equal to the PUCCH repetition transmission count (e.g., when the value of nrofSlots is greater than the PUCCH repetition transmission count), the UE determines whether a slot in which PUCCH transmission is configured is an X-slot (S930). When the slot is not the X-slot, the UE transmits an original PUCCH (S935). Alternatively, when the slot is the X-slot, the UE determines whether the slot is a Y-slot (S940). When the slot is not the Y-slot, the UE does not transmit the PUCCH (S945). Alternatively, when the slot is the Y-slot, the UE transmits a partial PUCCH in the slot (S950). Herein, the step S930 may be the same as the step S820 of FIG. 8. In addition, the step S935 may be the same as the step S825 of FIG. 8. In addition, the step S940 may be the same as the step S830 of FIG. 8. In addition, the step S945 may be the same as the step S835 of FIG. 8. In addition, the step S950 may be the same as the step S850 of FIG. 8.

For convenience it is assumed in FIG. 9 that: (ii) one parameter nrofSlots is subtracted by adding the transmission count of the original PUCCH and the transmission count of the partial PUCCH. That is, when the UE performs steps S935 and/or S950, the UE configures a PUCCH repetition transmission count (S960). The step S960 is a step of considering a partial/original PUCCH transmission count computed/counted by the UE. If the partial PUCCH is repeatedly transmitted N times in one slot, in the step S960, the UE may configure the PUCCH repetition transmission count to the existing computed/counted value + N.

The UE may repeat partial/original PUCCH transmission until the computed/counted partial/original PUCCH transmission count is equal to a value indicated by a parameter nrofSlots. Thereafter, the computed/counted partial/original PUCCH transmission count is equal to the value indicated by the parameter nrofSlots, the UE ends PUCCH transmission (S970).

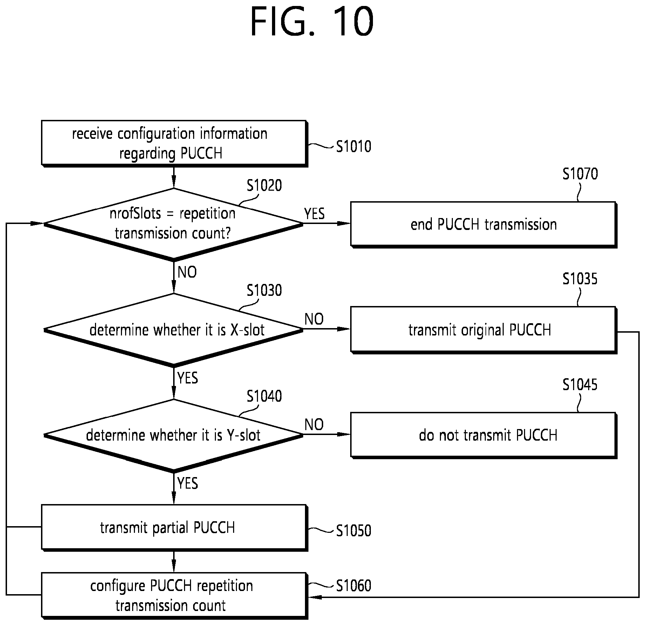

FIG. 10 is a flowchart for another example of a PUCCH transmission method of a UE according to some implementations of the present specification.

Referring to FIG. 10, the UE receives configuration information regarding a PUCCH (S1010). The step above may be the same as the step S810 of FIG. 8. In addition, the configuration information regarding the PUCCH may indicate a parameter nrofSlots. The parameter may be a parameter for the PUCCH repetition count.

Thereafter, the UE determines whether a value of the parameter nrofSlots is equal to a repetition transmission count (S1020). Herein, as described in FIG. 9, the step above may be omitted before PUCCH transmission after receiving the configuration information regarding the PUCCH. That is, the step above may be performed after initial PUCCH transmission.

When it is before PUCCH transmission after receiving the configuration information regarding the PUCCH or when the value of nrofSlots is not equal to the PUCCH repetition transmission count (e.g., when the value of nrofSlots is greater than the PUCCH repetition transmission count), the UE determines whether a slot in which PUCCH transmission is configured is an X-slot (S1030). When the slot is not the X-slot, the UE transmits an original PUCCH (S1035). Alternatively, when the slot is the X-slot, the UE determines whether the slot is a Y-slot (S1040). When the slot is not the Y-slot, the UE does not transmit the PUCCH (S1045). Alternatively, when the slot is the Y-slot, the UE transmits a partial PUCCH in the slot (S1050). Herein, the step S1030 may be the same as the step S820 of FIG. 8. In addition, the step S1035 may be the same as the step S825 of FIG. 8. In addition, the step S1040 may be the same as the step S830 of FIG. 8. In addition, the step S1045 may be the same as the step S835 of FIG. 8. In addition, the step S1050 may be the same as the step S850 of FIG. 8.

For convenience, it is assumed in FIG 10 that: (iii) only an original PUCCH transmission count is computed. For example, until the original PUCCH transmission count is equal to a value indicated by the parameter nrofSlots, the UE repeatedly transmits the original PUCCH (S1035), while transmitting a partial PUCCH for a Y-slot not capable of transmitting the original PUCCH (S1050). The step S1050 may not be considered in the number of transmitting the PUCCH, counted by the UE. As another example, N times of transmitting the partial PUCCH may be regarded as one time of transmitting the original PUCCH.

A case where partial PUCCH transmission is not considered in the PUCCH repetition transmission count is assumed in the example of FIG. 10. That is, when the UE performs the step S1035, the UE sets the PUCCH repetition transmission count (S1060). In FIG. 10, the step S1060 is a step in which only the original PUCCH transmission count computed/counted by the UE is considered. A partial PUCCH repetition transmission count is not considered in step S1060.

The UE may repeat the original PUCCH transmission until the computed/counted original PUCCH transmission count is equal to the value indicated by the parameter nrofSlots. Thereafter, when the computed/counted original PUCCH transmission count is equal to the value indicated by the parameter nrofSlots, the UE ends PUCCH transmission (S1070).

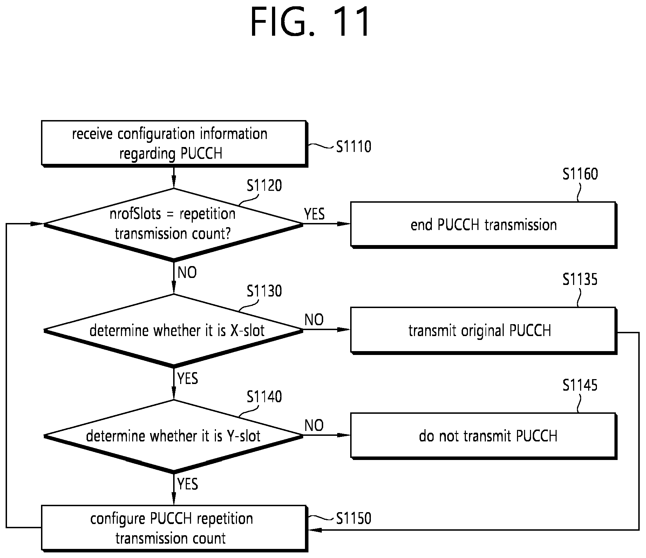

FIG. 11 is a flowchart for another example of a PUCCH transmission method of a UE according to some implementations of the present specification.

In FIG. 11, since steps S1110, S1120, S1130, S1135, S1140, and S1145 may be respectively the same as steps S1010, S1020, S1030, S1035, S1040, and S1045, redundant descriptions will be omitted.

For convenience of explanation, a process of transmitting a partial PUCCH is omitted in FIG. 11. A UE may transmit the partial PUCCH in all Y-slots. Alternatively, the UE may transmit the partial PUCCH only in some of the Y-slots.

In FIG. 11, when the UE counts a PUCCH transmission count, an original PUCCH transmission count is also counted, and the number of Y-slots capable of transmitting the partial PUCCH may also be counted together. In this case, irrespective of whether the partial PUCCH is transmitted in practice in a corresponding Y slot, the number of Y slots may be regarded as the PUCCH transmission count.

Some or all of the aforementioned methods are used so that the UE configures a PUCCH repetition transmission count, based on the original PUCCH transmission count and the partial PUCCH transmission count (S1150). Thereafter, if the computed/counted PUCCH transmission count is equal to a value indicated by a parameter nrofSlots, the UE ends PUCCH transmission (S1160).

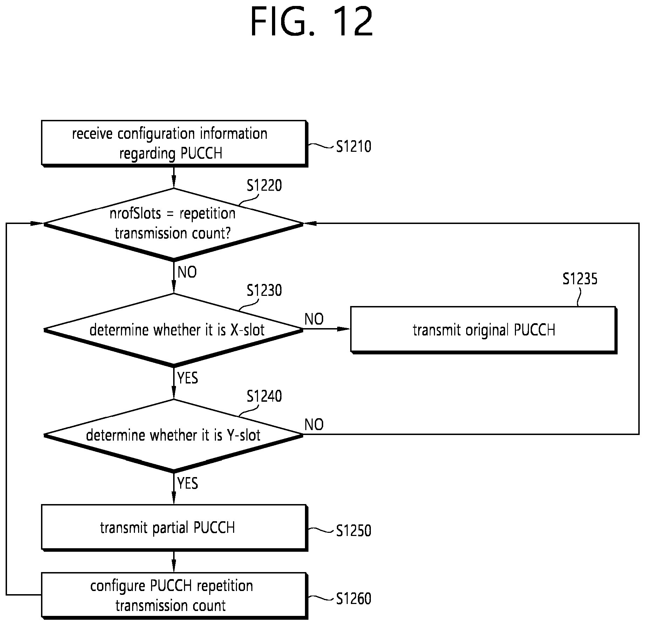

FIG. 12 is a flowchart for another example of a PUCCH transmission method of a UE according to some implementations of the present specification.

In FIG. 12, since steps S1210, S1220, S1230, S1235, S1240, and S1250 may be respectively the same as steps S910, S920, S930, S935, S940, and S950, redundant descriptions will be omitted.

As described above, the parameter nrofSlots may be configured individually for each of original PUCCH transmission and partial PUCCH transmission, or may be configured equally. It is assumed in FIG. 12 that: (i) the UE individually subtracts (or individually compare) the parameter nrofSlots by counting a PUCCH transmission count individually for each of original PUCCH transmission and partial PUCCH transmission.

For convenience, a process of comparing a transmission count related to original PUCCH transmission and a corresponding parameter nrofSlots is omitted in FIG. 12.

The UE may repeat partial PUCCH transmission until the counted partial PUCCH transmission count is equal to a value indicated by the parameter nrofSlots.

In other words, the UE performs partial PUCCH transmission (S1250), and then configures a PUCCH repetition transmission count (S1260). In this case, in the PUCCH repetition transmission count, a repetition transmission count for the partial PUCCH and a repetition transmission count for the original PUCCH are configured independently. In addition, in step S1240, if it is determined that a Y-slot is not present, the UE returns to the step S1220.

Hereinafter, embodiments based on some of the proposed methods described above will be described. It is obvious that various proposed methods of the present specification are not limited to embodiments described below.

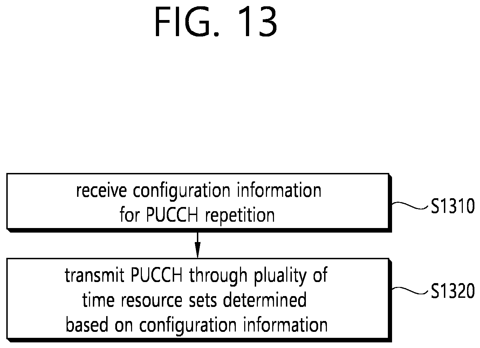

FIG. 13 is a flowchart for an example of a PUCCH transmission method of a UE according to some implementations of the present specification.

Referring to FIG. 13, the UE receives configuration information for a PUCCH repetition (S1310). Herein, the configuration information indicates the number of slots for the PUCCH repetition, a starting symbol for the PUCCH repetition, and a symbol length for the PUCCH repetition. For example, information on the number of slots may be obtained through a parameter nrofSlots . Information on the starting symbol may be obtained through a parameter startingSymbolIndex. Information on the symbol length may be obtained through a parameter nrofSymbols.

The UE transmits the PUCCH through a plurality of time resource sets determined based on the configuration information (S1320). Herein, each of the plurality of time resource sets is constructed of the starting symbol and the symbol length. In addition, the number of the plurality of time resource sets may be equal to, or not equal to, the number of the slots.

In addition, based on that a specific symbol included in a specific time resource set among the plurality of time resource sets is not available in the PUCCH transmission, the UE transmits the PUCCH through the remaining symbols other than the specific symbol included in the specific time resource set. Herein, the PUCCH transmitted through the remaining symbols is a partial PUCCH of the present specification. In addition, the PUCCH transmitted through the time resource set in which the specific symbol is not present is an original PUCCH of the present specification.

In addition, a method of determining a time resource for transmitting a partial PUCCH, a method of counting a PUCCH repetition count including a partial PUCCH, and a frequency hopping and intra-slot arrangement method for the partial PUCCH may be determined based on methods proposed in the present specification.

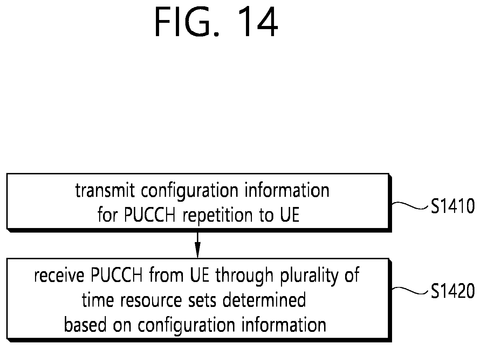

FIG. 14 is a flowchart for an example of a receiving method for a PUCCH repetition of a BS according to some implementations of the present specification.

Referring to FIG. 13, the BS transmits configuration information for the PUCCH repetition to a UE (S1410). Herein, the configuration information indicates the number of slots for the PUCCH repetition, a starting symbol for the PUCCH repetition, and a symbol length for the PUCCH repetition.

The BS receives the PUCCH from the UE through a plurality of time resource sets determined based on the configuration information (S1420). Herein, each of the plurality of time resource sets is be constructed of the starting symbol and the symbol length. In addition, the number of the plurality of time resource sets may be equal to, or not equal to, the number of the slots.

In addition, based on that a specific symbol included in a specific time resource set among the plurality of time resource sets is not available in the PUCCH transmission, the BS receives the PUCCH from the UE through the remaining symbols other than the specific symbol included in the specific time resource set. Herein, the PUCCH transmitted through the remaining symbols is a partial PUCCH of the present specification. In addition, the PUCCH transmitted through the time resource set in which the specific symbol is not present is an original PUCCH of the present specification.

Methods proposed in the present specification may include at least one computer readable medium, which is executed by at least one processor, one or more processors, and one or more memoires operatively coupled by means of the one or more processors and storing instructions, in addition to a UE. The one or more processors may also be performed by an apparatus configured to control the UE and performing methods proposed in the present specification by executing the instructions. In addition, according to the methods proposed in the present specification, it is apparent that an operation to be performed by a BS corresponding to an operation performed by the UE may be considered.

Hereinafter, an example of a communication system to which the present disclosure is applied will be described.

Although not limited to this, various descriptions, functions, procedures, proposals, methods, and/or operation flowcharts of the present disclosure disclosed in this document may be applied to various fields requiring wireless communication/connection (e.g., 5G) between devices.

Hereinafter, it will be exemplified in more detail with reference to the drawings. In the following drawings/descriptions, the same reference numerals may represent the same or corresponding hardware blocks, software blocks, or functional blocks, unless otherwise indicated.

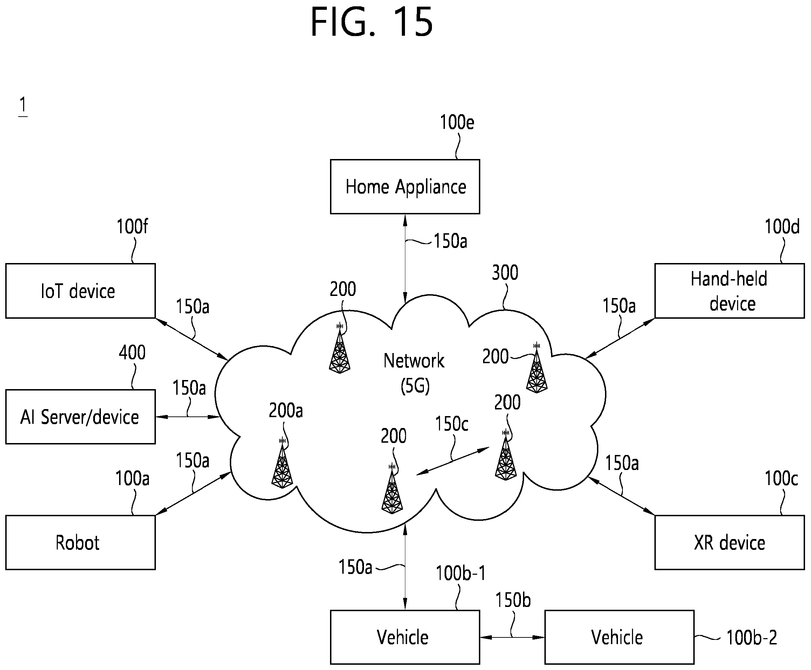

FIG. 15 shows a communication system (1), in accordance with an embodiment of the present disclosure.

Referring to FIG. 15, a communication system (1) to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot (100a), vehicles (100b-1, 100b-2), an eXtended Reality (XR) device (100c), a hand-held device (100d), a home appliance (100e), an Internet of Things (IoT) device (100f), and an Artificial Intelligence (AI) device/server (400). For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, and so on. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device (200a) may operate as a BS/network node with respect to other wireless devices.

Here, the wireless communication technology implemented in the wireless device of the present specification may include a narrowband Internet of Things for low-power communication as well as LTE, NR, and 6G. In this case, for example, the NB-IoT technology may be an example of a Low Power Wide Area Network (LPWAN) technology. In addition, it may be implemented in standards such as LTE Cat NB1 and/or LTE Cat NB2, and is not limited to the above-described name. Additionally or alternatively, the wireless communication technology implemented in the wireless device of the present specification may perform communication based on LTE-M technology. In this case, as an example, the LTE-M technology may be an example of an LPWAN technology, and may be called by various names such as enhanced machine type communication (eMTC). For example, LTE-M technology may be implemented in at least one of various standards such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described name. Additionally or alternatively, the wireless communication technology implemented in the wireless device of the present specification may include at least one of ZigBee, Bluetooth, and Low Power Wide Area Network (LPWAN) in consideration of low-power communication, and is not limited to the above-described name. For example, the ZigBee technology can create PAN (personal area networks) related to small/low-power digital communication based on various standards such as IEEE 802.15.4, and can be called by various names.

The wireless devices (100a~100f) may be connected to the network (300) via the BSs (200). An AI technology may be applied to the wireless devices (100a~100f) and the wireless devices (100a~100f) may be connected to the AI server (400) via the network (300). The network (300) may be configured using a 3G network, a 4G (e.g., LTE) network, or a 5G (e.g., NR) network. Although the wireless devices (100a~100f) may communicate with each other through the BSs (200)/network (300), the wireless devices (100a~100f) may perform direct communication (e.g., sidelink communication) with each other without passing through the BSs/network. For example, the vehicles (100b-1, 100b-2) may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices (100a~100f).

Wireless communication/connections (150a, 150b, 150c) may be established between the wireless devices (100a~100f)/BS (200), or BS (200)/BS (200). Herein, the wireless communication/connections may be established through various RATs (e.g., 5G NR) such as uplink/downlink communication (150a), sidelink communication (150b) (or, D2D communication), or inter BS communication (e.g. relay, Integrated Access Backhaul (IAB)). The wireless devices and the BSs/the wireless devices may transmit/receive radio signals to/from each other through the wireless communication/connections (150a, 150b). For example, the wireless communication/connections (150a, 150b) may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

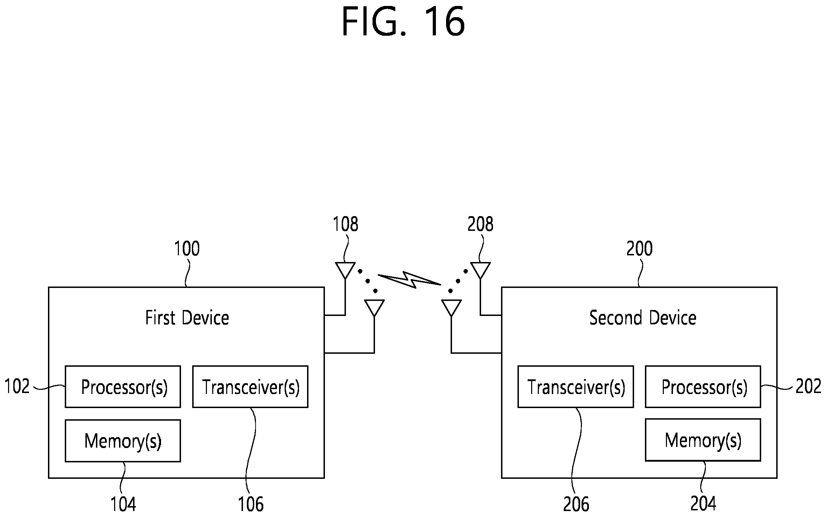

FIG. 16 shows wireless devices, in accordance with an embodiment of the present disclosure.

Referring to FIG. 16, a first wireless device (100) and a second wireless device (200) may transmit radio signals through a variety of RATs (e.g., LTE and NR). Herein, {the first wireless device (100) and the second wireless device (200)} corresponds to {the wireless device (100x), the BS (200)} and/or {the wireless device (100x), the wireless device (100x)} of FIG. 15.

The first wireless device (100) includes one or more processors (102) and one or more memories (104) and additionally further includes one or more transceivers (106) and/or one or more antennas (108). The processor(s) (102) may control the memory(s) (104) and/or the transceiver(s) (106) and is configured to implement the descriptions, functions, procedures, proposals, methods, and/or operational flowcharts disclosed in this document. For example, the processor(s) (102) may process information within the memory(s) (104) to generate first information/signals and then transmit radio signals including the first information/signals through the transceiver(s) (106). The processor(s) (102) may receive radio signals including second information/signals through the transceiver (106) and then store information obtained by processing the second information/signals in the memory(s) (104). The memory(s) (104) is connected to the processor(s) (102) and stores a variety of information related to operations of the processor(s) (102). For example, the memory(s) (104) may store software code including commands for performing a part or the entirety of processes controlled by the processor(s) (102) or for performing the descriptions, functions, procedures, proposals, methods, and/or operational flowcharts disclosed in this document. Herein, the processor(s) (102) and the memory(s) (104) may be a part of a communication modem/circuit/chip designed to implement RAT (e.g., LTE or NR). The transceiver(s) (106) is connected to the processor(s) (102) and may transmit and/or receive radio signals through one or more antennas (108). Each of the transceiver(s) (106) may include a transmitter and/or a receiver. The transceiver(s) (106) may be interchangeably used with Radio Frequency (RF) unit(s). In the present disclosure, the wireless device may represent a communication modem/circuit/chip.

The second wireless device (200) includes one or more processors (202) and one or more memories (204) and additionally further includes one or more transceivers (206) and/or one or more antennas (208). The processor(s) (202) may control the memory(s) (204) and/or the transceiver(s) (206) and is configured to implement the descriptions, functions, procedures, proposals, methods, and/or operational flowcharts disclosed in this document. For example, the processor(s) (202) may process information within the memory(s) (204) to generate third information/signals and then transmit radio signals including the third information/signals through the transceiver(s) (206). The processor(s) (202) may receive radio signals including fourth information/signals through the transceiver(s) (106) and then store information obtained by processing the fourth information/signals in the memory(s) (204). The memory(s) (204) is connected to the processor(s) (202) and stores a variety of information related to operations of the processor(s) (202). For example, the memory(s) (204) may store software code including commands for performing a part or the entirety of processes controlled by the processor(s) (202) or for performing the descriptions, functions, procedures, proposals, methods, and/or operational flowcharts disclosed in this document. Herein, the processor(s) (202) and the memory(s) (204) may be a part of a communication modem/circuit/chip designed to implement RAT (e.g., LTE or NR). The transceiver(s) (206) is connected to the processor(s) (202) and may transmit and/or receive radio signals through one or more antennas (208). Each of the transceiver(s) (206) may include a transmitter and/or a receiver. The transceiver(s) (206) may be interchangeably used with RF unit(s). In the present disclosure, the wireless device may represent a communication modem/circuit/chip.

Hereinafter, hardware elements of the wireless devices (100, 200) will be described more specifically. One or more protocol layers may be implemented by, without being limited to, one or more processors (102, 202). For example, the one or more processors (102, 202) may implement one or more layers (e.g., functional layers such as PHY, MAC, RLC, PDCP, RRC, and SDAP). The one or more processors (102, 202) may generate one or more Protocol Data Units (PDUs) and/or one or more Service Data Unit (SDUs) according to the descriptions, functions, procedures, proposals, methods, and/or operational flowcharts disclosed in this document. The one or more processors (102, 202) may generate messages, control information, data, or information according to the descriptions, functions, procedures, proposals, methods, and/or operational flowcharts disclosed in this document. The one or more processors (102, 202) may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers (106, 206). The one or more processors (102, 202) may receive the signals (e.g., baseband signals) from the one or more transceivers (106, 206) and obtain the PDUs, SDUs, messages, control information, data, or information according to the descriptions, functions, procedures, proposals, methods, and/or operational flowcharts disclosed in this document.

The one or more processors (102, 202) may be referred to as controllers, microcontrollers, microprocessors, or microcomputers. The one or more processors (102, 202) may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors (102, 202). The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors (102, 202) or stored in the one or more memories (104, 204) so as to be driven by the one or more processors (102, 202). The descriptions, functions, procedures, proposals, methods, and/or operational flowcharts disclosed in this document may be implemented using firmware or software in the form of code,

The one or more memories (104, 204) are connected to the one or more processors (102, 202) and store various types of data, signals, messages, information, programs, code, instructions, and/or commands. The one or more memories (104, 204) may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories (104, 204) may be located at the interior and/or exterior of the one or more processors (102, 202). The one or more memories (104, 204) may be connected to the one or more processors (102, 202) through various technologies such as wired or wireless connection.

The one or more transceivers (106, 206) may transmit user data, control information, and/or radio signals/channels, mentioned in the methods and/or operational flowcharts of this document, to one or more other devices. The one or more transceivers (106, 206) may receive user data, control information, and/or radio signals/channels, mentioned in the descriptions, functions, procedures, proposals, methods, and/or operational flowcharts disclosed in this document, from one or more other devices. In particular, the one or more transceivers (106, 206) are connected to the one or more processors (102, 202) and transmit and receive radio signals. For example, the one or more processors (102, 202) may perform control so that the one or more transceivers (106, 206) may transmit user data, control information, or radio signals to one or more other devices. The one or more processors (102, 202) may perform control so that the one or more transceivers (106, 206) may receive user data, control information, or radio signals from one or more other devices. The one or more transceivers (106, 206) may be connected to the one or more antennas (108, 208) and the one or more transceivers (106, 206) may be configured to transmit and receive user data, control information, and/or radio signals/channels, mentioned in the descriptions, functions, procedures, proposals, methods, and/or operational flowcharts disclosed in this document, through the one or more antennas (108, 208). In this document, the one or more antennas may be a plurality of physical antennas or a plurality of logical antennas (e.g., antenna ports). The one or more transceivers (106, 206) may convert received radio signals/channels, and so on, from RF band signals into baseband signals in order to process received user data, control information, radio signals/channels, and so on, using the one or more processors (102, 202). The one or more transceivers (106, 206) may convert the user data, control information, radio signals/channels, and so on, processed using the one or more processors (102, 202) from the base band signals into the RF band signals. To this end, the one or more transceivers (106, 206) may include (analog) oscillators and/or filters.

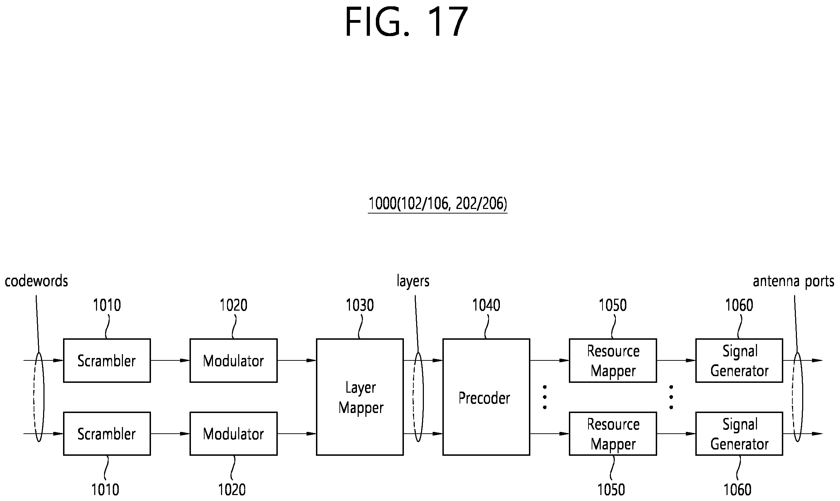

FIG. 17 shows a signal process circuit for a transmission signal, in accordance with an embodiment of the present disclosure.

Referring to FIG. 17, a signal processing circuit (1000) may include scramblers (1010), modulators (1020), a layer mapper (1030), a precoder (1040), resource mappers (1050), and signal generators (1060). An operation/function of FIG. 17 may be performed, without being limited to, the processors (102, 202) and/or the transceivers (106, 206) of FIG. 16. Hardware elements of FIG. 17 may be implemented by the processors (102, 202) and/or the transceivers (106, 206) of FIG. 16. For example, blocks 1010~1060 may be implemented by the processors (102, 202) of FIG. 16. Alternatively, the blocks 1010~1050 may be implemented by the processors (102, 202) of FIG. 16 and the block 1060 may be implemented by the transceivers (106, 206) of FIG. 16.

Codewords may be converted into radio signals via the signal processing circuit (1000) of FIG. 17. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers (1010). Scramble sequences used for scrambling may be generated based on an initialization value, and the initialization value may include ID information of a wireless device. The scrambled bit sequences may be modulated to modulation symbol sequences by the modulators (1020). A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper (1030). Modulation symbols of each transport layer may be mapped (precoded) to corresponding antenna port(s) by the precoder (1040). Outputs z of the precoder (1040) may be obtained by multiplying outputs y of the layer mapper (1030) by an N*M precoding matrix W. Herein, N is the number of antenna ports and M is the number of transport layers. The precoder (1040) may perform precoding after performing transform precoding (e.g., DFT) for complex modulation symbols. Alternatively, the precoder (1040) may perform precoding without performing transform precoding.

The resource mappers (1050) may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators (1060) may generate radio signals from the mapped modulation symbols and the generated radio signals may be transmitted to other devices through each antenna. For this purpose, the signal generators (1060) may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures (1010~1060) of FIG. 17. For example, the wireless devices (e.g., 100, 200 of FIG. 16) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

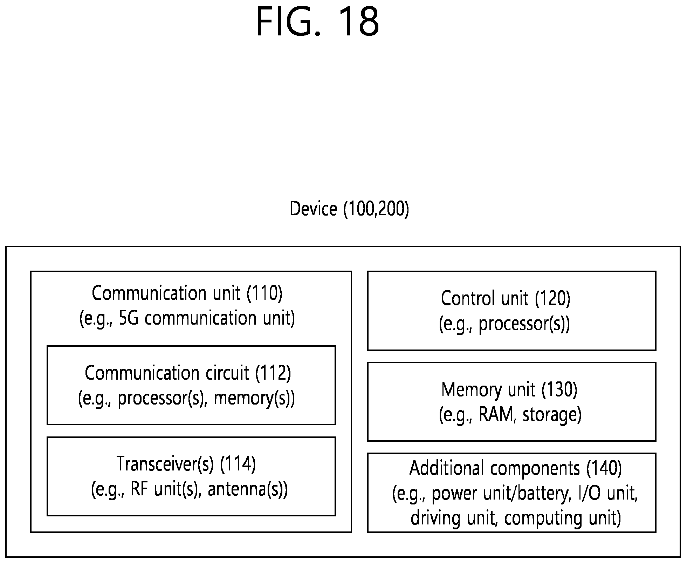

FIG. 18 shows another example of a wireless device, in accordance with an embodiment of the present disclosure. The wireless device may be implemented in various forms according to a use-case/service (refer to FIG. 15).

Referring to FIG. 18, wireless devices (100, 200) may correspond to the wireless devices (100, 200) of FIG. 16 and may be configured by various elements, components, units/portions, and/or modules. For example, each of the wireless devices (100, 200) may include a communication unit (110), a control unit (120), a memory unit (130), and additional components (140). The communication unit may include a communication circuit (112) and transceiver(s) (114). For example, the communication circuit (112) may include the one or more processors (102, 202) and/or the one or more memories (104, 204) of FIG. 16. For example, the transceiver(s) (114) may include the one or more transceivers (106, 206) and/or the one or more antennas (108, 208) of FIG. 16. The control unit (120) is electrically connected to the communication unit (110), the memory (130), and the additional components (140) and controls overall operation of the wireless devices. For example, the control unit (120) may control an electric/mechanical operation of the wireless device based on programs/code/commands/information stored in the memory unit (130). The control unit (120) may transmit the information stored in the memory unit (130) to the exterior (e.g., other communication devices) via the communication unit (110) through a wireless/wired interface or store, in the memory unit (130), information received through the wireless/wired interface from the exterior (e.g., other communication devices) via the communication unit (110).

The additional components (140) may be variously configured according to types of wireless devices. For example, the additional components (140) may include at least one of a power unit/battery, input/output (I/O) unit, a driving unit, and a computing unit. The wireless device may be implemented in the form of, without being limited to, the robot (100a of FIG. 15), the vehicles (100b-1, 100b-2 of FIG. 15), the XR device (100c of FIG. 15), the hand-held device (100d of FIG. 15), the home appliance (100e of FIG. 15), the IoT device (100f of FIG. 15), a digital broadcast terminal, a hologram device, a public safety device, an MTC device, a medicine device, a fintech device (or a finance device), a security device, a climate/environment device, the AI server/device (400 of FIG. 15), the BSs (200 of FIG. 15), a network node, and so on. The wireless device may be used in a mobile or fixed place according to a use-example/service.

In FIG. 18, the entirety of the various elements, components, units/portions, and/or modules in the wireless devices (100, 200) may be connected to each other through a wired interface or at least a part thereof may be wirelessly connected through the communication unit (110). For example, in each of the wireless devices (100, 200), the control unit (120) and the communication unit (110) may be connected by wire and the control unit (120) and first units (e.g., 130, 140) may be wirelessly connected through the communication unit (110). Each element, component, unit/portion, and/or module within the wireless devices (100, 200) may further include one or more elements. For example, the control unit (120) may be configured by a set of one or more processors. As an example, the control unit (120) may be configured by a set of a communication control processor, an application processor, an Electronic Control Unit (ECU), a graphical processing unit, and a memory control processor. As another example, the memory (130) may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 18 will be described in detail with reference to the drawings.

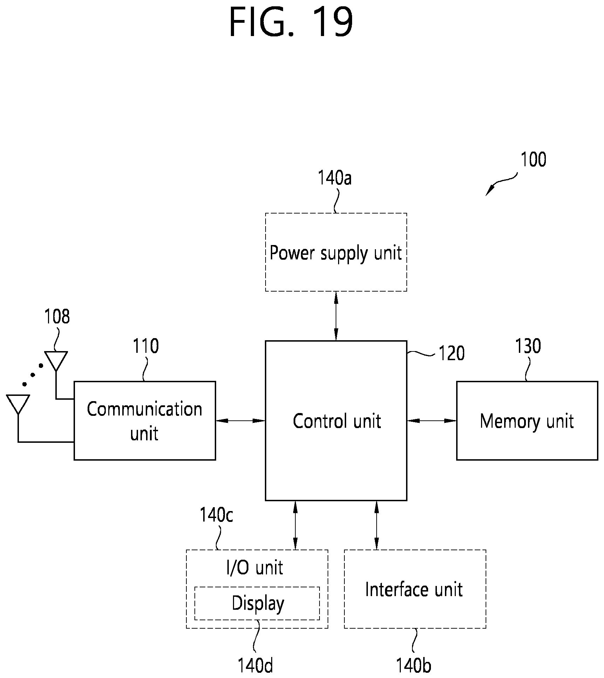

FIG. 19 shows a hand-held device, in accordance with an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 19, a hand-held device (100) may include an antenna unit (108), a communication unit (110), a control unit (120), a memory unit (130), a power supply unit (140a), an interface unit (140b), and an I/O unit (140c). The antenna unit (108) may be configured as a part of the communication unit (110). Blocks 110~130/140a~140c correspond to the blocks 110~130/140 of FIG. 18, respectively.

The communication unit (110) may transmit and receive signals (e.g., data and control signals) to and from other wireless devices or BSs. The control unit (120) may perform various operations by controlling constituent elements of the hand-held device (100). The control unit (120) may include an Application Processor (AP). The memory unit (130) may store data/parameters/programs/code/commands needed to drive the hand-held device (100). The memory unit (130) may store input/output data/information. The power supply unit (140a) may supply power to the hand-held device (100) and include a wired/wireless charging circuit, a battery, and so on. The interface unit (140b) may support connection of the hand-held device (100) to other external devices. The interface unit (140b) may include various ports (e.g., an audio I/O port and a video I/O port) for connection with external devices. The I/O unit (140c) may input or output video information/signals, audio information/signals, data, and/or information input by a user. The I/O unit (140c) may include a camera, a microphone, a user input unit, a display unit (140d), a speaker, and/or a haptic module.

As an example, in the case of data communication, the I/O unit (140c) may obtain information/signals (e.g., touch, text, voice, images, or video) input by a user and the obtained information/signals may be stored in the memory unit (130).

The communication unit (110) may convert the information/signals stored in the memory into radio signals and transmit the converted radio signals to other wireless devices directly or to a BS. The communication unit (110) may receive radio signals from other wireless devices or the BS and then restore the received radio signals into original information/signals. The restored information/signals may be stored in the memory unit (130) and may be output as various types (e.g., text, voice, images, video, or haptic) through the I/O unit (140c).

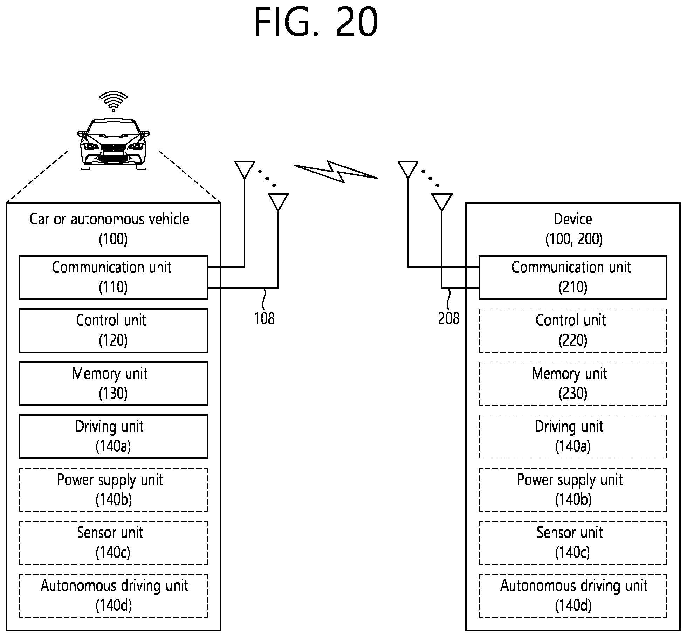

FIG. 20 shows a vehicle or an autonomous vehicle, in accordance with an embodiment of the present disclosure. The vehicle or autonomous vehicle may be implemented by a mobile robot, a car, a train, a manned/unmanned Aerial Vehicle (AV), a ship, and so on.

Referring to FIG. 20, a vehicle or autonomous vehicle (100) may include an antenna unit (108), a communication unit (110), a control unit (120), a driving unit (140a), a power supply unit (140b), a sensor unit (140c), and an autonomous driving unit (140d). The antenna unit (108) may be configured as a part of the communication unit (110). The blocks 110/130/140a~140d correspond to the blocks 110/130/140 of FIG. 18, respectively.

The communication unit (110) may transmit and receive signals (e.g., data and control signals) to and from external devices such as other vehicles, BSs (e.g., gNBs and road side units), and servers. The control unit (120) may perform various operations by controlling elements of the vehicle or the autonomous vehicle (100). The control unit (120) may include an Electronic Control Unit (ECU). The driving unit (140a) may cause the vehicle or the autonomous vehicle (100) to drive on a road. The driving unit (140a) may include an engine, a motor, a powertrain, a wheel, a brake, a steering device, and so on. The power supply unit (140b) may supply power to the vehicle or the autonomous vehicle (100) and include a wired/wireless charging circuit, a battery, and so on. The sensor unit (140c) may obtain a vehicle state, ambient environment information, user information, and so on. The sensor unit (140c) may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit (140d) may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit (110) may receive map data, traffic information data, and so on, from an external server. The autonomous driving unit (140d) may generate an autonomous driving path and a driving plan from the obtained data. The control unit (120) may control the driving unit (140a) such that the vehicle or the autonomous vehicle (100) may move along the autonomous driving path according to the driving plan (e.g., speed/direction control). In the middle of autonomous driving, the communication unit (110) may aperiodically/periodically obtain recent traffic information data from the external server and obtain surrounding traffic information data from neighboring vehicles. In the middle of autonomous driving, the sensor unit (140c) may obtain a vehicle state and/or surrounding environment information. The autonomous driving unit (140d) may update the autonomous driving path and the driving plan based on the newly obtained data/information. The communication unit (110) may transfer information on a vehicle position, the autonomous driving path, and/or the driving plan to the external server. The external server may predict traffic information data using AI technology, and so on, based on the information collected from vehicles or autonomous vehicles and provide the predicted traffic information data to the vehicles or the autonomous vehicles.

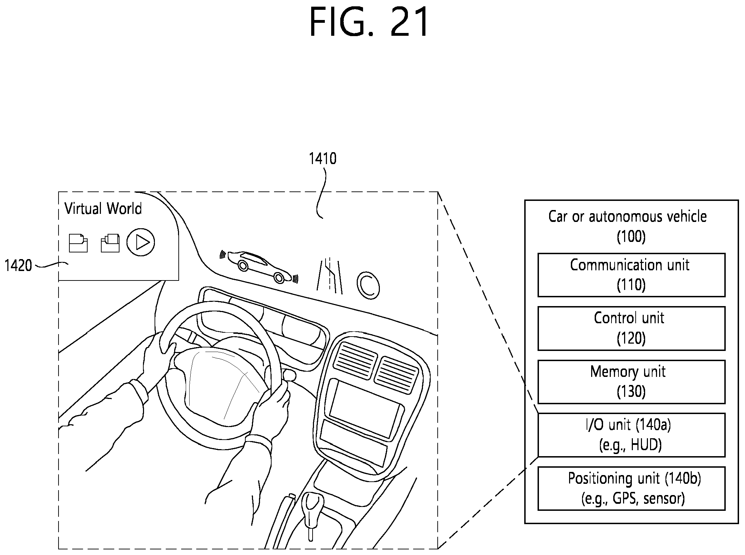

FIG. 21 shows a vehicle, in accordance with an embodiment of the present disclosure. The vehicle may be implemented as a transport means, an aerial vehicle, a ship, and so on.

Referring to FIG. 21, a vehicle (100) may include a communication unit (110), a control unit (120), a memory unit (130), an I/O unit (140a), and a positioning unit (140b). Herein, the blocks 110~130/140a~140b correspond to blocks 110~130/140 of FIG. 18.

The communication unit (110) may transmit and receive signals (e.g., data and control signals) to and from external devices such as other vehicles or BSs. The control unit (120) may perform various operations by controlling constituent elements of the vehicle (100). The memory unit (130) may store data/parameters/programs/code/commands for supporting various functions of the vehicle (100). The I/O unit (140a) may output an AR/VR object based on information within the memory unit (130). The I/O unit (140a) may include an HUD. The positioning unit (140b) may obtain information on the position of the vehicle (100). The position information may include information on an absolute position of the vehicle (100), information on the position of the vehicle (100) within a traveling lane, acceleration information, and information on the position of the vehicle (100) from a neighboring vehicle. The positioning unit (140b) may include a GPS and various sensors.

As an example, the communication unit (110) of the vehicle (100) may receive map information and traffic information from an external server and store the received information in the memory unit (130). The positioning unit (140b) may obtain the vehicle position information through the GPS and various sensors and store the obtained information in the memory unit (130). The control unit (120) may generate a virtual object based on the map information, traffic information, and vehicle position information and the I/O unit (140a) may display the generated virtual object in a window in the vehicle (1410, 1420). The control unit (120) may determine whether the vehicle (100) normally drives within a traveling lane, based on the vehicle position information. If the vehicle (100) abnormally exits from the traveling lane, the control unit (120) may display a warning on the window in the vehicle through the I/O unit (140a). In addition, the control unit (120) may broadcast a warning message regarding driving abnormity to neighboring vehicles through the communication unit (110). According to situation, the control unit (120) may transmit the vehicle position information and the information on driving/vehicle abnormality to related organizations.

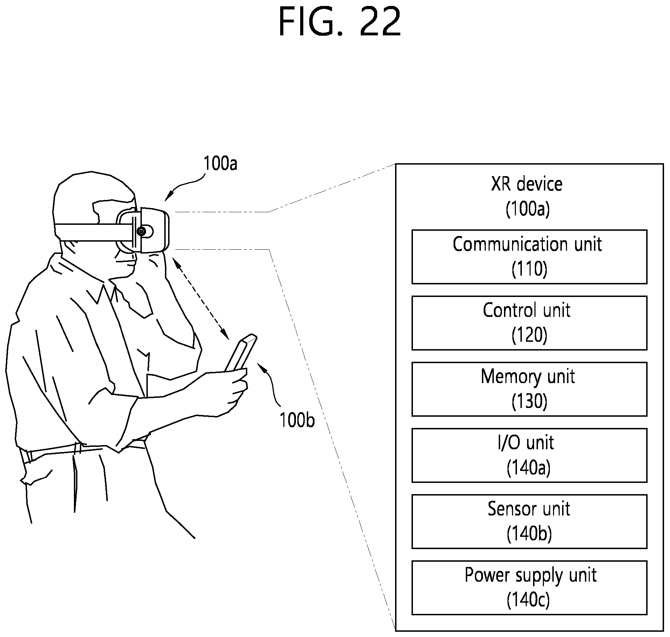

FIG. 22 shows an XR device, in accordance with an embodiment of the present disclosure. The XR device may be implemented by an HMD, an HUD mounted in a vehicle, a television, a smartphone, a computer, a wearable device, a home appliance, a digital signage, a vehicle, a robot, and so on.

Referring to FIG. 22, an XR device (100a) may include a communication unit (110), a control unit (120), a memory unit (130), an I/O unit (140a), a sensor unit (140b), and a power supply unit (140c). Herein, the blocks 110~130/140a~140c correspond to the blocks 110~130/140 of FIG. 31, respectively.

The communication unit (110) may transmit and receive signals (e.g., media data and control signals) to and from external devices such as other wireless devices, hand-held devices, or media servers. The media data may include video, images, and sound. The control unit (120) may perform various operations by controlling constituent elements of the XR device (100a). For example, the control unit (120) may be configured to control and/or perform procedures such as video/image acquisition, (video/image) encoding, and metadata generation and processing. The memory unit (130) may store data/parameters/programs/code/commands needed to drive the XR device (100a)/generate XR object. The I/O unit (140a) may obtain control information and data from the exterior and output the generated XR object. The I/O unit (140a) may include a camera, a microphone, a user input unit, a display unit, a speaker, and/or a haptic module. The sensor unit (140b) may obtain an XR device state, surrounding environment information, user information, and so on. The sensor unit (140b) may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone and/or a radar. The power supply unit (140c) may supply power to the XR device (100a) and include a wired/wireless charging circuit, a battery, and so on.

For example, the memory unit (130) of the XR device (100a) may include information (e.g., data) needed to generate the XR object (e.g., an AR/VR/MR object). The I/O unit (140a) may receive a command for manipulating the XR device (100a) from a user and the control unit (120) may drive the XR device (100a) according to a driving command of a user. For example, when a user desires to watch a film or news through the XR device (100a), the control unit (120) transmits content request information to another device (e.g., a hand-held device 100b) or a media server through the communication unit (130). The communication unit (130) may download/stream content such as films or news from another device (e.g., the hand-held device 100b) or the media server to the memory unit (130). The control unit (120) may control and/or perform procedures such as video/image acquisition, (video/image) encoding, and metadata generation/-processing with respect to the content and generate/output the XR object based on information on a surrounding space or a real object obtained through the I/O unit (140a)/sensor unit (140b).

The XR device (100a) may be wirelessly connected to the hand-held device (100b) through the communication unit (110) and the operation of the XR device (100a) may be controlled by the hand-held device (100b). For example, the hand-held device (100b) may operate as a controller of the XR device (100a). To this end, the XR device (100a) may obtain information on a 3D position of the hand-held device (100b) and generate and output an XR object corresponding to the hand-held device (100b).

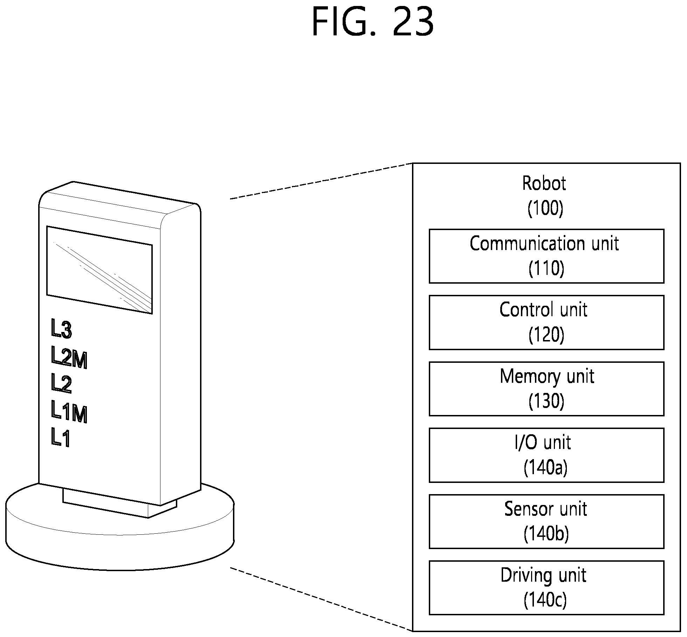

FIG. 23 shows a robot, in accordance with an embodiment of the present disclosure. The robot may be categorized into an industrial robot, a medical robot, a household robot, a military robot, and so on, according to a used purpose or field.

Referring to FIG. 23, a robot (100) may include a communication unit (110), a control unit (120), a memory unit (130), an I/O unit (140a), a sensor unit (140b), and a driving unit (140c). Herein, the blocks 110~130/140a~140c correspond to the blocks 110~130/140 of FIG. 18, respectively.

The communication unit (110) may transmit and receive signals (e.g., driving information and control signals) to and from external devices such as other wireless devices, other robots, or control servers. The control unit (120) may perform various operations by controlling constituent elements of the robot (100). The memory unit (130) may store data/parameters/programs/code/commands for supporting various functions of the robot (100). The I/O unit (140a) may obtain information from the exterior of the robot (100) and output information to the exterior of the robot (100). The I/O unit (140a) may include a camera, a microphone, a user input unit, a display unit, a speaker, and/or a haptic module. The sensor unit (140b) may obtain internal information of the robot (100), surrounding environment information, user information, and so on. The sensor unit (140b) may include a proximity sensor, an illumination sensor, an acceleration sensor, a magnetic sensor, a gyro sensor, an inertial sensor, an IR sensor, a fingerprint recognition sensor, an ultrasonic sensor, a light sensor, a microphone, a radar, and so on. The driving unit (140c) may perform various physical operations such as movement of robot joints. In addition, the driving unit (140c) may cause the robot (100) to travel on the road or to fly. The driving unit (140c) may include an actuator, a motor, a wheel, a brake, a propeller, and so on.

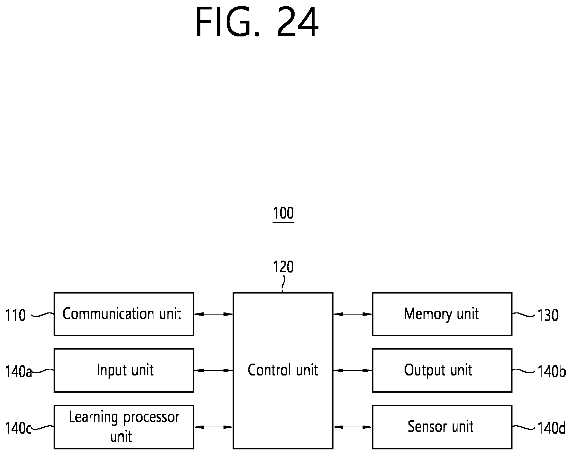

FIG. 24 shows an AI device, in accordance with an embodiment of the present disclosure. The AI device may be implemented by a fixed device or a mobile device, such as a TV, a projector, a smartphone, a PC, a notebook, a digital broadcast terminal, a tablet PC, a wearable device, a Set Top Box (STB), a radio, a washing machine, a refrigerator, a digital signage, a robot, a vehicle, and so on.

Referring to FIG. 24, an AI device (100) may include a communication unit (110), a control unit (120), a memory unit (130), an I/O unit (140a/140b), a learning processor unit (140c), and a sensor unit (140d). The blocks 110~130/140a~140d correspond to blocks 110~130/140 of FIG. 18, respectively.

The communication unit (110) may transmit and receive wired/radio signals (e.g., sensor information, user input, learning models, or control signals) to and from external devices such as other AI devices (e.g., 100x, 200, 400 of FIG. 15) or an AI server (e.g., 400 of FIG. 15) using wired/wireless communication technology. To this end, the communication unit (110) may transmit information within the memory unit (130) to an external device and transmit a signal received from the external device to the memory unit (130).

The control unit (120) may determine at least one feasible operation of the AI device (100), based on information which is determined or generated using a data analysis algorithm or a machine learning algorithm. The control unit (120) may perform an operation determined by controlling constituent elements of the AI device (100). For example, the control unit (120) may request, search, receive, or use data of the learning processor unit (140c) or the memory unit (130) and control the constituent elements of the AI device (100) to perform a predicted operation or an operation determined to be preferred among at least one feasible operation. The control unit (120) may collect history information including the operation contents of the AI device (100) and operation feedback by a user and store the collected information in the memory unit (130) or the learning processor unit (140c) or transmit the collected information to an external device such as an AI server (400 of FIG. 16). The collected history information may be used to update a learning model.

The memory unit (130) may store data for supporting various functions of the AI device (100). For example, the memory unit (130) may store data obtained from the input unit (140a), data obtained from the communication unit (110), output data of the learning processor unit (140c), and data obtained from the sensor unit (140). The memory unit (130) may store control information and/or software code needed to operate/drive the control unit (120).

The input unit (140a) may obtain various types of data from the exterior of the AI device (100). For example, the input unit (140a) may obtain learning data for model learning, and input data to which the learning model is to be applied. The input unit (140a) may include a camera, a microphone, and/or a user input unit. The output unit (140b) may generate output related to a visual, auditory, or tactile sense. The output unit (140b) may include a display unit, a speaker, and/or a haptic module. The sensing unit (140) may obtain at least one of internal information of the AI device (100), surrounding environment information of the AI device (100), and user information, using various sensors. The sensor unit (140) may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone, and/or a radar.

The learning processor unit (140c) may learn a model consisting of artificial neural networks, using learning data. The learning processor unit (140c) may perform AI processing together with the learning processor unit of the AI server (400 of FIG. 15). The learning processor unit (140c) may process information received from an external device through the communication unit (110) and/or information stored in the memory unit (130). In addition, an output value of the learning processor unit (140c) may be transmitted to the external device through the communication unit (110) and may be stored in the memory unit (130).

The technical features of the method claims of the present specification may be combined to be implemented as a device, and the technical features of the device claims of the present specification may be combined to be implemented as a method. In addition, the technical features of the method claims of the present specification and the technical features of the device claims may be combined to be implemented as a device, and the technical features of the method claims of the present specification and the technical features of the device claims may be combined to be implemented as a method.

**Claims**

**1.** A method, comprising:

receiving (S1310), by a user equipment, UE, (100), configuration information for a physical uplink control channel, PUCCH, repetition, wherein the configuration information informs a number of slots for the PUCCH repetition, a starting symbol for the PUCCH repetition, and a symbol length for the PUCCH repetition; and

transmitting (S1320), by the UE (100), PUCCHs through a plurality of time resource sets determined based on the configuration information,

wherein each of the plurality of time resource sets is constructed of the starting symbol and the symbol length,

wherein, based on that a specific symbol included in a specific time resource set among the plurality of time resource sets is not available for PUCCH transmission, the UE (100) transmits a partial PUCCH through remaining symbols other than the specific symbol included in the specific time resource set, and
wherein the partial PUCCH is a PUCCH excluding a demodulation reference signal, DMRS, from an original PUCCH which is a PUCCH transmitted through a time resource set in which the specific symbol is not present.

2. The method of claim 1,

wherein a specific slot is a slot in which the specific symbol is included, and
wherein the number of specific slots is included in the number of slots for the PUCCH repetition.

3. The method of claim 2, wherein the specific slot includes a slot in which the number of the remaining symbols is 0.

4. The method of claim 3, wherein the UE (100) does not transmit the partial PUCCH on the slot in which the number of the remaining symbols is 0.

5. The method of claim 2, wherein the specific slot includes a slot in which the number of the remaining symbols is not 0, and the specific slot excludes the slot in which the number of the remining symbols is 0.

6. The method of claim 1,

wherein a specific slot is a slot in which the specific symbol is included, and
wherein the number of specific slots is not included in the number of slots for the PUCCH repetition.

7. The method of claim 6, wherein the number of slots for the PUCCH repetition is the number of slots in which the specific symbol is not included.

8. The method of claim 1, wherein frequency hopping is applied to the partial PUCCH transmitted through the remaining symbols other than the specific symbol.

9. The method of claim 1, wherein the partial PUCCH transmitted through the remaining symbols other than the specific symbol is transmitted through the same frequency.

10. The method of claim 1, wherein the partial PUCCH transmitted through the remaining symbols other than the specific symbol is mapped to the remaining symbols in an orderly manner according to a symbol index.

11. A user equipment, UE, (100), comprising:

at least one transceiver (106);
at least one memory (104); and
at least one processor (102) operably connectable to the at least one transceiver (106) and the at least one memory (104),
wherein the at least one memory (104) stores instructions that, based on being executed by the at least one processor (102), cause the at least one processor (102) to perform operations comprising:

receiving (S1310), by the UE (100), configuration information for a physical uplink control channel, PUCCH, repetition, wherein the configuration information informs a number of slots for the PUCCH repetition, a starting symbol for the PUCCH repetition, and a symbol length for the PUCCH repetition; and
transmitting (S1320), by the UE (100), PUCCHs through a plurality of time resource sets determined based on the configuration information,
wherein each of the plurality of time resource sets is constructed of the starting symbol and the symbol length,
wherein, based on that a specific symbol included in a specific time resource set among the plurality of time resource sets is not available for PUCCH transmission, the UE (100) transmits a partial PUCCH through remaining symbols other than the specific symbol included in the specific time resource set, and
wherein the partial PUCCH is a PUCCH excluding a demodulation reference signal, DMRS, from an original PUCCH which is a PUCCH transmitted through a time resource set in which the specific symbol is not present.

12. A method, comprising:

transmitting (S1410), by a base station (200), configuration information for a physical uplink control channel, PUCCH, repetition to a user equipment, UE, (100), wherein the configuration information informs a number of slots for the PUCCH repetition, a starting symbol for the PUCCH repetition, and a symbol length for the PUCCH repetition; and

receiving (S1420), by the base station (200), PUCCHs from the UE (100) through a plurality of time resource sets determined based on the configuration information,

wherein each of the plurality of time resource sets is constructed of the starting symbol and the symbol length,

wherein, based on that a specific symbol included in a specific time resource set among the plurality of time resource sets is not available for PUCCH transmission, the base station (200) receives a partial PUCCH from the UE (100) through remaining symbols other than the specific symbol included in the specific time resource set, and

wherein the partial PUCCH is a PUCCH excluding a demodulation reference signal, DMRS, from an original PUCCH which is a PUCCH received through a time resource set in which the specific symbol is not present.

**13.** A base station (200), comprising:

at least one transceiver (206);
at least one memory (204); and
at least one processor (202) operably connectable to the at least one transceiver (206) and the at least one memory (204),
wherein the at least one memory (204) stores instructions that, based on being executed by the at least one processor (202), cause the at least one processor (202) to perform operations comprising:

transmitting (S1410) configuration information for a physical uplink control channel, PUCCH, repetition to a user equipment, UE, (100), wherein the configuration information informs a number of slots for the PUCCH repetition, a starting symbol for the PUCCH repetition, and a symbol length for the PUCCH repetition; and
receiving (S1420) PUCCHs from the UE (100) through a plurality of time resource sets determined based on the configuration information,
wherein each of the plurality of time resource sets is constructed of the starting symbol and the symbol length,
wherein, based on that a specific symbol included in a specific time resource set among the plurality of time resource sets is not available for PUCCH transmission, the base station (200) receives a partial PUCCH from the UE (100) through remaining symbols other than the specific symbol included in the specific time resource set, and
wherein the partial PUCCH is a PUCCH excluding a demodulation reference signal, DMRS, from an original PUCCH which is a PUCCH received transmitted through a time resource set in which the specific symbol is not present.

## Patentansprüche

**1.** Verfahren, das umfasst:

Empfangen (S1310) von Konfigurationsinformationen für einen physikalischen Uplink-Steuerkanal, PUCCH, durch ein Benutzergerät, UE, (100), wobei die Konfigurationsinformationen eine Anzahl von Schlitzen für die PUCCH-Wiederholung, ein Startsymbol für die PUCCH-Wiederholung und eine Symbollänge für die PUCCH-Wiederholung angeben; und
Senden (S1320) von PUCCHs durch das UE (100) über mehrere Zeitressourcensätze, die auf der Grundlage der Konfigurationsinformationen bestimmt werden,
wobei jeder der mehreren Zeitressourcensätze aus dem Startsymbol und der Symbollänge aufgebaut ist,
wobei, basierend darauf, dass ein bestimmtes Symbol, das in einem bestimmten Zeitressourcensatz unter den mehreren Zeitressourcensätzen enthalten ist, für die PUCCH-Übertragung nicht verfügbar ist, das UE (100) einen Teil-PUCCH über verbleibende Symbole außer dem bestimmten Symbol, das in dem bestimmten Zeitressourcensatz enthalten ist, überträgt, und
wobei der Teil-PUCCH ein PUCCH ist, der ein Demodulationsreferenzsignal, DMRS, aus einem ursprünglichen PUCCH ausschließt, der ein PUCCH ist, der über einen Zeitressourcensatz übertragen wurde, in dem das spezifische Symbol nicht vorhanden ist.

**2.** Verfahren nach Anspruch 1,

wobei ein spezifischer Schlitz ein Schlitz ist, in dem das spezifische Symbol enthalten ist, und
wobei die Anzahl der spezifischen Schlitze in der Anzahl von Schlitzen für die PUCCH-Wiederholung enthalten ist.

3. Verfahren nach Anspruch 2, wobei der spezifische Schlitz einen Schlitz umfasst, in dem die Anzahl der verbleibenden Symbole 0 ist.

4. Verfahren nach Anspruch 3, wobei das UE (100) den Teil-PUCCH nicht auf dem Schlitz überträgt, in dem die Anzahl der verbleibenden Symbole 0 ist.

5. Verfahren nach Anspruch 2, wobei der spezifische Schlitz einen Schlitz umfasst, in dem die Anzahl der verbleibenden Symbole nicht 0 ist, und der spezifische Schlitz den Schlitz ausschließt, in dem die Anzahl der verbleibenden Symbole 0 ist.

6. Verfahren nach Anspruch 1,

wobei ein spezifischer Schlitz ein Schlitz ist, in dem das spezifische Symbol enthalten ist, und
wobei die Anzahl der spezifischen Schlitze nicht in der Anzahl von Schlitzen für die PUCCH-Wiederholung enthalten ist.

7. Verfahren nach Anspruch 6, wobei die Anzahl von Schlitzen für die PUCCH-Wiederholung die Anzahl von Schlitzen ist, in denen das spezifische Symbol nicht enthalten ist.

8. Verfahren nach Anspruch 1, wobei Frequenzsprung auf den Teil-PUCCH angewendet wird, der durch die verbleibenden Symbole außer dem spezifischen Symbol übertragen wird.

9. Verfahren nach Anspruch 1, wobei der Teil-PUCCH, der über die verbleibenden Symbole außer dem spezifischen Symbol übertragen wird, über die gleiche Frequenz übertragen wird.

10. Verfahren nach Anspruch 1, wobei der Teil-PUCCH, die über die verbleibenden Symbole außer dem spezifischen Symbol übertragen wird, den verbleibenden Symbolen in einer geordneten Weise gemäß einem Symbolindex zugeordnet wird.

11. Benutzergerät, UE (100), umfassend:

mindestens einen Transceiver (106);
mindestens einen Speicher (104); und
mindestens einen Prozessor (102), der mit dem mindestens einen Transceiver (106) und dem mindestens einen Speicher (104) betriebsmäßig verbunden ist,
wobei der mindestens eine Speicher (104) Befehle speichert, die, basierend auf ihrer Ausführung durch den mindestens einen Prozessor (102), den mindestens einen Prozessor (102) veranlassen, Operationen auszuführen, die umfassen:

Empfangen (S1310), durch das UE (100), von Konfigurationsinformationen für eine physikalische Uplink-Steuerkanal, PUCCH, -Wiederholung, wobei die Konfigurationsinformationen eine Anzahl von Schlitzen für die PUCCH-Wiederholung, ein Startsymbol für die PUCCH-Wiederholung und eine Symbollänge für die PUCCH-Wiederholung angeben; und
Senden (S1320) von PUCCHs durch das UE (100) über mehrere Zeitressourcensätze, die auf der Grundlage der Konfigurationsinformationen bestimmt werden,
wobei jeder der mehreren Zeitressourcensätze aus dem Startsymbol und der Symbollänge aufgebaut ist,
wobei, basierend darauf, dass ein spezifisches Symbol, das in einem spezifischen Zeitressourcensatz unter den mehreren Zeitressourcensätzen enthalten ist, nicht für die PUCCH-Übertragung verfügbar ist, das UE (100) einen Teil-PUCCH über verbleibende Symbole außer dem spezifischen Symbol, das in dem spezifischen Zeitressourcensatz enthalten ist, überträgt, und
wobei der Teil-PUCCH ein PUCCH ist, der ein Demodulationsreferenzsignal, DMRS, aus einem ursprünglichen PUCCH ausschließt, der ein PUCCH ist, der über einen Zeitressourcensatz übertragen wird, in dem das spezifische Symbol nicht vorhanden ist.

**12.** Verfahren, das umfasst:

Senden (S1410) von Konfigurationsinformationen für einen physikalischen Uplink-Steuerkanal, PUCCH, durch eine Basisstation (200) an ein Benutzergerät, UE, (100), wobei die Konfigurationsinformationen eine Anzahl von Schlitzen für die PUCCH-Wiederholung, ein Startsymbol für die PUCCH-Wiederholung und eine Symbollänge für die PUCCH-Wiederholung angeben; und

Empfangen (S1420) von PUCCHs durch die Basisstation (200) von dem UE (100) über mehrere Zeitressourcensätze, die auf der Grundlage der Konfigurationsinformationen bestimmt werden,
wobei jeder der mehreren Zeitressourcensätze aus dem Startsymbol und der Symbollänge aufgebaut ist,
wobei die Basisstation (200) auf der Grundlage, dass ein bestimmtes Symbol, das in einem bestimmten Zeitressourcensatz unter den mehreren Zeitressourcensätzen enthalten ist, nicht für die PUCCH-Übertragung verfügbar ist, einen Teil-PUCCH von dem UE (100) über verbleibende Symbole empfängt, die nicht das bestimmte Symbol enthalten, das in dem bestimmten Zeitressourcensatz enthalten ist, und
wobei der Teil-PUCCH ein PUCCH ist, der ein Demodulationsreferenzsignal, DMRS, aus einem ursprünglichen PUCCH ausschließt, der ein PUCCH ist, der über einen Zeitressourcensatz empfangen wurde, in dem das spezifische Symbol nicht vorhanden ist.

**13.** Basisstation (200), die umfasst:

mindestens einen Transceiver (206);
mindestens einen Speicher (204); und
mindestens einen Prozessor (202), der mit dem mindestens einen Transceiver (206) und dem mindestens einen Speicher (204) betriebsmäßig verbindbar ist,
wobei der mindestens eine Speicher (204) Befehle speichert, die, basierend auf ihrer Ausführung durch den mindestens einen Prozessor (202), den mindestens einen Prozessor (202) veranlassen, Operationen auszuführen, die umfassen:

Senden (S1410) von Konfigurationsinformationen für einen physikalischen Uplink-Steuerkanal, PUCCH, -Wiederholung an ein Benutzergerät, UE, (100), wobei die Konfigurationsinformationen eine Anzahl von Schlitzen für die PUCCH-Wiederholung, ein Startsymbol für die PUCCH-Wiederholung und eine Symbollänge für die PUCCH-Wiederholung angeben; und

Empfangen (S1420) von PUCCHs von dem UE (100) über eine Vielzahl von Zeitressourcensätzen, die auf der Grundlage der Konfigurationsinformationen bestimmt werden,
wobei jeder der mehreren Zeitressourcensätze aus dem Startsymbol und der Symbollänge aufgebaut ist,
wobei die Basisstation (200) auf der Grundlage, dass ein bestimmtes Symbol, das in einem bestimmten Zeitressourcensatz unter den mehreren Zeitressourcensätzen enthalten ist, für die PUCCH-Übertragung nicht verfügbar ist, einen Teil-PUCCH von dem UE (100) über verbleibende Symbole empfängt, die nicht das bestimmte Symbol enthalten, das in dem bestimmten Zeitressourcensatz enthalten ist, und
wobei der Teil-PUCCH ein PUCCH ist, der ein Demodulationsreferenzsignal, DMRS, aus einem ursprünglichen PUCCH ausschließt, der ein PUCCH ist, der über einen Zeitressourcensatz empfangen wurde, in dem das spezifische Symbol nicht vorhanden ist.

**Revendications**

**1.** Procédé, comprenant:

la réception (S1310), par un équipement utilisateur, UE, (100), d'informations de configuration pour une répétition de canal physique de commande de liaison montante, PUCCH, les informations de configuration indiquant un nombre de créneaux pour la répétition de PUCCH, un symbole de départ pour la répétition de PUCCH et une longueur de symbole pour la répétition de PUCCH; et

la transmission (S1320), par l'UE (100), de PUCCH par l'intermédiaire d'une pluralité d'ensembles de ressources temporelles déterminés sur la base des informations de configuration,
dans lequel chacun de la pluralité des ensembles de ressources temporelles est construit à partir du symbole de départ et de la longueur de symbole,
dans lequel, étant donné qu'un symbole spécifique inclus dans un ensemble de ressources temporelles spécifique parmi la pluralité d'ensembles de ressources temporelles n'est pas disponible pour la transmission PUCCH, l'UE (100) transmet un PUCCH partiel par les symboles restants autres que le symbole spécifique inclus dans l'ensemble de ressources temporelles spécifique, et

dans lequel le PUCCH partiel est un PUCCH excluant un signal de référence de démodulation, DMRS, d'un PUCCH original qui est un PUCCH transmis par un ensemble de ressources temporelles dans lequel le symbole spécifique n'est pas présent.

2. Procédé selon la revendication 1,

dans lequel un créneau spécifique est un créneau dans lequel n'est pas inclus le symbole spécifique, et
dans lequel le nombre de créneaux spécifiques est inclus dans le nombre de créneaux pour la répétition PUCCH.

3. Procédé selon la revendication 2, dans lequel le créneau spécifique comprend un créneau dans lequel le nombre de symboles restants est de 0.

4. Procédé selon la revendication 3, dans lequel l'UE (100) ne transmet pas le PUCCH partiel sur le créneau dans lequel le nombre de symboles restants est de 0.

5. Procédé selon la revendication 2, dans lequel le créneau spécifique comprend un créneau dans lequel le nombre de symboles restants est différent de 0, et le créneau spécifique exclut le créneau dans lequel le nombre de symboles restants est de 0.

6. Procédé selon la revendication 1,

dans lequel un créneau spécifique est un créneau dans lequel n'est pas inclus le symbole spécifique, et
dans lequel le nombre de créneaux spécifiques n'est pas inclus dans le nombre de créneaux pour la répétition de PUCCH.

7. Procédé selon la revendication 6, dans lequel le nombre de créneaux pour la répétition de PUCCH est le nombre de créneaux dans lesquels le symbole spécifique n'est pas inclus.

8. Procédé selon la revendication 1, dans lequel le saut de fréquence est appliqué au PUCCH partiel transmis par les symboles restants autres que le symbole spécifique.

9. Procédé selon la revendication 1, dans lequel le PUCCH partiel transmis par les symboles restants autres que le symbole spécifique est transmis par la même fréquence.

10. Procédé selon la revendication 1, dans lequel le PUCCH partiel transmis par les symboles restants autres que le symbole spécifique est mis en correspondance avec les symboles restants de manière ordonnée en fonction d'un index de symbole.

11. Équipement utilisateur, UE, (100), comprenant:

au moins un émetteur-récepteur (106);
au moins une mémoire (104); et
au moins un processeur (102) pouvant être connecté fonctionnellement à l'au moins un émetteur récepteur (106) et à l'au moins une mémoire (104),
dans lequel l'au moins une mémoire (104) stocke des instructions, qui, lorsqu'elles sont exécutées par l'au moins un processeur (102), amènent l'au moins un processeur (102) à réaliser les opérations comprenant:

la réception (S1310), par l'UE (100), d'informations de configuration pour une répétition de canal physique de commande de liaison montante, PUCCH, les informations de configuration indiquant un nombre de créneaux pour la répétition de PUCCH, un symbole de départ pour la répétition de PUCCH et une longueur de symbole pour la répétition de PUCCH; et
la transmission (S1320), par l'UE (100), de PUCCH par l'intermédiaire d'une pluralité d'ensembles de ressources temporelles déterminés sur la base des informations de configuration,
dans lequel chacun de la pluralité des ensembles de ressources temporelles est construit à partir du symbole de départ et de la longueur de symbole,
dans lequel, étant donné qu'un symbole spécifique inclus dans un ensemble de ressources temporelles spécifique parmi la pluralité d'ensembles de ressources temporelles n'est pas disponible pour la transmission PUCCH, l'UE (100) transmet un PUCCH partiel par les symboles restants autres que le symbole spécifique inclus dans l'ensemble de ressources temporelles spécifique, et

dans lequel le PUCCH partiel est un PUCCH excluant un signal de référence de démodulation, DMRS, d'un PUCCH original qui est un PUCCH transmis par un ensemble de ressources temporelles dans lequel le symbole spécifique n'est pas présent.

12. Procédé, comprenant:

la transmission (S1410), par une station de base (200), d'informations de configuration pour une répétition de canal physique de commande de liaison montante, PUCCH, à un équipement utilisateur, UE (100), les informations de configuration indiquant un nombre de créneaux pour la répétition de PUCCH, un symbole de départ pour la répétition de PUCCH et une longueur de symbole pour la répétition de PUCCH; et

la réception (S1420), par la station de base (200), des PUCCH provenant de l'UE (100) par l'intermédiaire d'une pluralité d'ensembles de ressources temporelles déterminés sur la base des informations de configuration,

dans lequel chacun de la pluralité des ensembles de ressources temporelles est construit à partir du symbole de départ et de la longueur de symbole,

dans lequel, étant donné qu'un symbole spécifique inclus dans un ensemble de ressources temporelles spécifique parmi la pluralité d'ensembles de ressources temporelles n'est pas disponible pour la transmission PUCCH, la station de base (200) reçoit un PUCCH partiel provenant de l'UE (100) par les symboles restants autres que le symbole spécifique inclus dans l'ensemble de ressources temporelles spécifique, et

dans lequel le PUCCH partiel est un PUCCH excluant un signal de référence de démodulation, DMRS, d'un PUCCH original qui est un PUCCH reçu par un ensemble de ressources temporelles dans lequel le symbole spécifique n'est pas présent.

13. Station de base (200), comprenant:

au moins un émetteur-récepteur (206);
au moins une mémoire (204); et
au moins un processeur (202) pouvant être connecté fonctionnellement à l'au moins un émetteur récepteur (206) et à l'au moins une mémoire (204),
dans lequel l'au moins une mémoire (204) stocke des instructions, qui, lorsqu'elles sont exécutées par l'au moins un processeur (202), amènent l'au moins un processeur (202) à réaliser les opérations comprenant:

la transmission (S1410) des informations de configuration pour une répétition de canal physique de commande de liaison montante, PUCCH, à un équipement utilisateur, UE (100), les informations de configuration indiquant un nombre de créneaux pour la répétition de PUCCH, un symbole de départ pour la répétition de PUCCH et une longueur de symbole pour la répétition de PUCCH; et

la réception (S1420) des PUCCH provenant l'UE (100) par l'intermédiaire d'une pluralité d'ensembles de ressources temporelles déterminés sur la base des informations de configuration,

dans lequel chacun de la pluralité des ensembles de ressources temporelles est construit à partir du symbole de départ et de la longueur de symbole,

dans lequel, étant donné qu'un symbole spécifique inclus dans un ensemble de ressources temporelles spécifique parmi la pluralité d'ensembles de ressources temporelles n'est pas disponible pour la transmission PUCCH, la station de base (200) reçoit un PUCCH partiel provenant de l'UE (100) par les symboles restants autres que le symbole spécifique inclus dans l'ensemble de ressources temporelles spécifique, et

dans lequel le PUCCH partiel est un PUCCH excluant un signal de référence de démodulation, DMRS, d'un PUCCH original qui est un PUCCH reçu par un ensemble de ressources temporelles dans lequel le symbole spécifique n'est pas présent.

# FIG. 1

# FIG. 2

# FIG. 3

# FIG. 4

EP 4 231 573 B1

# FIG. 5

**gNB**
- RRM between cells
- RB control
- Connection mobility control
- Wireless access control
- Measurement setting and provision
- Dynamic resource allocation (scheduler)

NG-RAN

**AMF**
- NAS security
- Idle state mobility processing

**UPF**
- Mobility anchoring
- PDU processing

5GC

**SMF**
- UE IP address allocation
- PDU session control

Internet

EP 4 231 573 B1

# FIG. 6

```
· · ·  | One Frame (10ms)                          |  · · ·
```

```
· · ·  | Half-Frame (5ms) |   | Half-Frame (5ms) |  · · ·
```

```
· · ·  | Subframe 0 |  · · ·  | Subframe 4 | | Subframe 5 |  · · ·  | Subframe 9 |  · · ·
        |   (1ms)    |         |   (1ms)    | |   (1ms)    |         |   (1ms)    |
```

Subframe (1ms)

| | 15KHz | Slot 0 (14symbols) |
|---|---|---|

1ms

| 30KHz | Slot 0 (14symbols) | Slot 1 |
|---|---|---|

500us

| 60KHz | Slot 0 (14symbols) | Slot 1 | Slot 2 | Slot 3 |
|---|---|---|---|---|

250us

| 120KHz | Slot 0 (14symbols) | Slot 1 | Slot 2 | Slot 3 | Slot 4 | Slot 5 | Slot 6 | Slot 7 |
|---|---|---|---|---|---|---|---|---|

125us

FIG. 7

# FIG. 8

```
┌─────────────────────────────────┐
│  receive configuration information │ ～S810
│        regarding PUCCH            │
└─────────────────────────────────┘
                │
                ▼                S820
          ╱─────────────╲              NO    ┌──────────────────────────┐  S825
         ╱ determine whether ╲ ──────────────▶│  transmit original PUCCH │
         ╲  it is X-slot     ╱               └──────────────────────────┘
          ╲─────────────╱
                │ YES
                ▼                S830
          ╱─────────────╲              NO    ┌──────────────────────────┐  S835
         ╱ determine whether ╲ ──────────────▶│   do not transmit PUCCH  │
         ╲  it is Y-slot     ╱               └──────────────────────────┘
          ╲─────────────╱
                │ YES
                ▼
┌─────────────────────────────────┐
│     determine partial PUCCH      │ ～S840
│       transmission count         │
└─────────────────────────────────┘
                │
                ▼
┌─────────────────────────────────┐
│      transmit partial PUCCH      │ ～S850
└─────────────────────────────────┘
```

# FIG. 9

```
receive configuration information
        regarding PUCCH              — S910
                │
                ▼
        nrofSlots = repetition    ──S920── YES ──▶   end PUCCH transmission   ── S970
        transmission count?
                │ NO
                ▼
    determine whether it is X-slot  ──S930── NO ──▶   transmit original PUCCH  ── S935
                │ YES
                ▼
    determine whether it is Y-slot  ──S940── NO ──▶    do not transmit PUCCH   ── S945
                │ YES
                ▼
        transmit partial PUCCH      — S950
                │
                ▼
     configure PUCCH repetition     — S960
        transmission count
```

EP 4 231 573 B1

# FIG. 10

```
        ┌─────────────────────────────┐
        │  receive configuration       │
        │  information regarding PUCCH  │──── S1010
        └─────────────────────────────┘
                      │
                      ▼
              ╱────────────────╲                                    ┌─────────────────────────┐
             ╱  S1020           ╲         YES                        │                         │ ─── S1070
            ◇  nrofSlots =       ◇ ──────────────────────────────▶  │  end PUCCH transmission  │
             ╲ repetition       ╱                                    └─────────────────────────┘
              ╲transmission     ╱
               ╲ count?        ╱
                ╲────────────╱
                      │ NO
                      ▼
              ╱────────────────╲           NO                        ┌─────────────────────────┐
             ╱  S1030           ╲ ──────────────────────────────▶   │                         │ ─── S1035
            ◇  determine whether ◇                                   │  transmit original PUCCH │
             ╲  it is X-slot    ╱                                    └─────────────────────────┘
              ╲────────────────╱
                      │ YES
                      ▼
              ╱────────────────╲           NO                        ┌─────────────────────────┐
             ╱  S1040           ╲ ──────────────────────────────▶   │                         │ ─── S1045
            ◇  determine whether ◇                                   │   do not transmit PUCCH  │
             ╲  it is Y-slot    ╱                                    └─────────────────────────┘
              ╲────────────────╱
                      │ YES
                      ▼
        ┌─────────────────────────────┐
        │   transmit partial PUCCH     │──── S1050
        └─────────────────────────────┘
                      │
                      ▼
        ┌─────────────────────────────┐
        │  configure PUCCH repetition  │──── S1060
        │  transmission count          │
        └─────────────────────────────┘
```

EP 4 231 573 B1

# FIG. 11

receive configuration information regarding PUCCH — S1110

S1120 — nrofSlots = repetition transmission count?

YES → end PUCCH transmission — S1160

NO

S1130 — determine whether it is X-slot

NO → transmit original PUCCH — S1135

YES

S1140 — determine whether it is Y-slot

NO → do not transmit PUCCH — S1145

YES

configure PUCCH repetition transmission count — S1150

EP 4 231 573 B1

# FIG. 12

EP 4 231 573 B1

```
        ┌─────────────────────────────┐
        │ receive configuration       │
        │ information regarding PUCCH  │──── S1210
        └─────────────────────────────┘
                      │
                      ▼              S1220
              ╱───────────────╲
             ╱  nrofSlots =    ╲
            ╱  repetition       ╲◄──────────────────────────┐
            ╲  transmission      ╱                          │
             ╲  count?          ╱                           │
              ╲───────────────╱                             │
                      │ NO                                   │
                      ▼              S1230                   │
              ╱───────────────╲              NO    ┌──────────────────────┐  S1235
             ╱ determine whether╲─────────────────►│ transmit original    │
             ╲  it is X-slot    ╱                   │ PUCCH                │
              ╲───────────────╱                     └──────────────────────┘
                      │ YES
                      ▼              S1240
              ╱───────────────╲              NO
             ╱ determine whether╲────────────────────────────┘
             ╲  it is Y-slot    ╱
              ╲───────────────╱
                      │ YES
                      ▼
        ┌─────────────────────────────┐
        │  transmit partial PUCCH     │──── S1250
        └─────────────────────────────┘
                      │
                      ▼
        ┌─────────────────────────────┐
        │ configure PUCCH repetition  │──── S1260
        │ transmission count          │
        └─────────────────────────────┘
```

# FIG. 13

```
┌─────────────────────────────────┐
│   receive configuration information      │
│        for PUCCH repetition             │ ⌐ S1310
└─────────────────────────────────┘
                │
                ▼
┌─────────────────────────────────┐
│   transmit PUCCH through pluality of     │
│      time resource sets determined       │ ⌐ S1320
│   based on configuration information     │
└─────────────────────────────────┘
```

# FIG. 14

transmit configuration information
for PUCCH repetition to UE — S1410

receive PUCCH from UE through plurality of
time resource sets determined
based on configuration information — S1420

# FIG. 15

EP 4 231 573 B1

# FIG. 16

# FIG. 17

1000(102/106, 202/206)

# FIG. 18

Device (100,200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

EP 4 231 573 B1

# FIG. 19

100

140a

Power supply unit

108

110

120

130

Communication unit

Control unit

Memory unit

140c

I/O unit

Display

Interface unit

140d

140b

# FIG. 20

Car or autonomous vehicle (100)

| |
| --- |
| Communication unit (110) |
| Control unit (120) |
| Memory unit (130) |
| Driving unit (140a) |
| Power supply unit (140b) |
| Sensor unit (140c) |
| Autonomous driving unit (140d) |

108

Device (100, 200)

| |
| --- |
| Communication unit (210) |
| Control unit (220) |
| Memory unit (230) |
| Driving unit (140a) |
| Power supply unit (140b) |
| Sensor unit (140c) |
| Autonomous driving unit (140d) |

208

# FIG. 21

EP 4 231 573 B1

# FIG. 22

XR device
(100a)

Communication unit
(110)

Control unit
(120)

Memory unit
(130)

I/O unit
(140a)

Sensor unit
(140b)

Power supply unit
(140c)

EP 4 231 573 B1

# FIG. 23

L3
L2M
L2
L1M
L1

Robot
(100)

Communication unit
(110)

Control unit
(120)

Memory unit
(130)

I/O unit
(140a)

Sensor unit
(140b)

Driving unit
(140c)

EP 4 231 573 B1

# FIG. 24

<u>100</u>

120

| 110 — Communication unit | Control unit (120) | Memory unit — 130 |
|---|---|---|
| 140a — Input unit | | Output unit — 140b |
| 140c — Learning processor unit | | Sensor unit — 140d |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020275436 A1
- EP 4191925 A1
- WO 2019207488 A1